# EUROPEAN PATENT SPECIFICATION

(11) **EP 0 460 851 B1**
(45) Date of publication and mention of the grant of the patent: **07.02.1996**
(21) Application number: 91304788.2
(22) Date of filing: 28.05.1991
(51) Int. Cl.: B63B 3/20, B63B 3/22, B63B 3/12, B63B 9/06

(54) **Vessel hull and construction method**
Schiffsrumpf und Verfahren zur Herstellung
Coque de bateau et méthode de construction

(30) Priority: 05.06.1990 US 532329
(43) Date of publication of application: 11.12.1991
(60) Divisional application: 94115475.9
(73) Proprietor: METRO MACHINE CORPORATION, Norfolk, Virginia 23501 (US); MARINEX INTERNATIONAL INC., Hoboken, New Jersey 07030 (US)
(72) Inventor: Cuneo, Joseph J., Hastings on the Hudson, New York 10706 (US); Garland, Charles, Williamsburg, Virginia 23185 (US); Goldbach, Richard A., Norfolk, Virginia 23517 (US); Goldbach, Robert D., Hoboken, New Jersey 07030 (US); McConnell, Frank E., Norfolk, Virginia 23517 (US); Tornay, Edmund G., New York, New York 10128 (US)
(74) Representative: Laight, Martin Harvey

(56) References cited:
- WO-A-87/02086
- FR-A- 2 483 877
- GB-A- 20 479
- GB-A- 2 143 182
- US-A- 2 353 260
- US-A- 4 638 754

## Description

The present invention relates to a vessel hull structure and to a method of constructing a vessel hull.

In the U.S. patent to Tornay, 4,638,754, issued January 27, 1987, there is disclosed a vessel hull and construction method, which is said to be particularly suitable for vessels of double hull construction, such as gas tankers with almost complete double hulls, and oil and product tankers with double bottoms. The disclosed system is said to be suitable for construction of commercial and naval ships and barges, and to be adaptable to provide any arrangement of decks and bulkheads within the hull.

In the construction system disclosed in the Tornay patent, the plating of the outer hull and bulkheads is constructed of standard-sized steel plates, usually about 8 feet by 40 feet, which are rolled to a slight cylindrical curvature, the axis of which is parallel to the longer edge. On the shell of the vessel, the plates are arranged with their long edges longitudinal. The plates are arranged with the curvature inwards or outwards, depending on the direction of the highest local load. The curved plates are then provided with a reverse bend or recurve along the midline between the long longitudinal edges. The short transverse edges and the long longitudinal edges are butt-welded together. To the midline of the plates at the recurve are welded longitudinal steel girders such as L or T-beams which match the recurved portion of the curved plates and are of sufficient depth and section modulus to span the distance between transverse bulkheads or deep webs. The local pressure loading on the plate causes a tensile or compressive stress, depending on the direction of the load, uniformly across the thickness of the curved plate in the same way that a cylindrical pressure vessel is stressed by an internal pressure. Because the plating is not subjected to local panel bending, closely spaced primary stiffeners are said to be not required. In addition to efficiently absorbing local pressure forces such as transverse membrane stresses, the curve and reverse curve also are said to provide stiffness in the longitudinal direction needed to resist compressive buckling caused by longitudinal hull bending stresses. An additional efficiency is said to be obtained from the girders along the midline of the curved plates, and thus contribute to the principal section modulus of the hull needed to resist longitudinal bending.

Such details of the construction as orientation of each module while being constructed, the method and means for performing the welding of module elements to one another, and of modules to one another, jigs or fixtures useful during module fabrication or joining, and module handling and manipulation apparatus and techniques do not appear to be presented in the Tornay patent, leading one to conclude that no non-conventional methods or means for construction were contemplated.

In a vessel hull, the ability of an unreinforced curved steel to resist pressure forces, bending, and buckling is determined by well known and classic criteria and is a direct function of plate width, length and thickness and an indirect function of radius of curvature.

Some flat plate tanker designs exist in which there is no transverse structure reinforcing the inner and outer hulls except for transverse bulkheads. The elimination of transverse structure in such designs is not therefore a new idea. However, the use of curved plate results in a buildup of excessive transverse forces at the lower corners (bilges) of the vessel which would normally require the installation of transverse deep webs, as contemplated in the Tornay patent.

Details of the design of a curved plate vessel which would eliminate the need for deep webs are not disclosed in the Tornay patent, nor are details which would eliminate the need to recurve the curved plate along its midline.

The use of a flat plate duct keel and flat plate upper corner box girders which permit the use of standardized curved plate modules in a wide range of double hull tanker sizes is not disclosed in the Tornay patent.

The use of a curved plate midbody in combination with flat plate bow and stern ends of a double hull tanker is not disclosed in the Tornay patent.

Shipfitting is the most technically demanding and time-consuming element of subassembling vessel hull sections. Shifting, holding, bending and trimming of plates and other elements is necessary so that welding can be satisfactorily accomplished and so that subassemblies can be assembled to one another to provide a hull that meets specifications.

The techniques of electroslag/electrogas welding generally require the use of a continuous cooling shoe on the back-sides of T-joints while welding is being accomplished. In prior art construction techniques using electroslag/ electrogas welding, efficiency has been penalized due to the time needed to set-up and provide cooling water plumbing to the cooling shoe.

Shipfitting and welding of vessel hulls as heretofore practiced in even the most highly rationalized construction facilities has necessitated that the construction workers have a lot of training and possess a wide range of skills. Increasing scarcity of trained workers possessing such a broad range of skills has driven-up labor costs to the point where vessel hulls cannot be profitably fabricated in many areas.

Conventional fabrication techniques also have made extensive use of temporary shipfitting devices, many of which are welded-on in normal practice, necessitating a considerable amount of surface preparation and painting after the devices are disconnected from the work.

Also in the prior art are assembly lines for flat panels. A typical panel assembly line comprises a long conveyor along which are mounted devices for assembling and welding steel sheets into panels each weighing, for instance, from 10 to 50 tons. Flat panels, when assembled to provide hulls, require the use of transverse framing crossing longitudinal framing.

If vessel hulls are constructed in modules that are sequentially connected to form the hull, and an attempt is made to do so on land, the land crane that would need to be used is expensive, and, should it become no longer needed due to eventual curtailing of the project, can be expected to have lost considerable value.

Land-based assembly might use a plurality (e.g., from six to ten) mobile cranes on pile-supported tracks. These are expensive to buy, install and maintain.

Two shipyards (neither of which is still operating), known to the present inventors, formerly used modular assembly and erection procedures for constructing vessel hulls.

One of these, the Erie yard of Litton Industries, built 1000-foot long ore carrier midbodies. (A tanker/carrier "midbody" is the main portion of the length of such a vessel, but for the bow and stern sections, that is of substantially constant transverse cross-sectional size and shape.)

At the Erie yard, midbody modules were each built in an upended spatial disposition (one which will be referred to herein as being "vertical"). These modules were built in the extreme end of the same graving dock that was used for joining the modules to one another and for joining purchased bow and stern units to the midbody. The modules weighed 600 tons each, and an electro-hydraulic jacking device was used for forming the individual upended modules over into a horizontal orientation for serial joining to form the midbody. The hydraulic jacking device, one of the largest ever made, was expensive to purchase, install and maintain. Failure of the device would have posed a serious threat to human life, and to the graving dock, which was the most expensive and indispensable facility at the Erie yard.

(Graving docks, such as the one at Erie, use stationary civil construction including pilings, concrete, fill, and piping embedded in the concrete of the dock floor. Pumps are continuously operated for relieving the dock, through the pipes, of water seepage through the dock floor. A graving dock functions much as if it were a bathtub with a gate at one end to let a vessel in and out. The level of the floor is sufficiently below the level of the adjoining body of water to permit the vessel being built or dry-docked to float clear of the blocking on the floor of the dock when the graving dock is filled with water by opening valves connected to that adjoining body of water. The concrete floor of a graving dock typically is supported by piling that is adequate to support the full weight of the vessel when the graving dock is empty of water. The perimeter wall of a graving dock, is constructed high enough to keep water out (except for seepage), at the highest tide for which the facility is designed to encounter.)

The module assembly area at the Erie yard was not accessible to heavy-lift floating derricks. Therefore, each subassembly had to be lifted using a land crane, often reaching to or beyond the maximum for which it was designed. The crane lifting and reaching capabilities acted as limits on the size and weight of individual midbody modules which could be fabricated at the Erie yard.

The fact that the graving dock at the Erie yard was constructed in place and fixed in its location meant that it had limited residual value, it could not be floated away and used elsewhere once there was no longer need for it at Erie.

One other shipyard at which modular assembly and erection procedures were used for constructing carrier/tanker vessel hulls, was the Arandal yard in Gotverken, Sweden. At the Gotverken yard, oil tankers were built in a graving dock. One end of the graving dock was located inside an enclosed building. Modules were assembled horizontally, one after another, at a single station located in the building, and then moved out into position in the open end of the graving dock. Probably the movement was accomplished on rollers. Because the modules were constructed horizontally, there was reduced accessibility for steel assembly and piping installation, compared with vertical construction, where a module being constructed is open at the top rather than at the side.

Caissons are commonly used for underwater work, e.g., for the construction of bridge piers. It is believed by the present inventors that caissons may have been used in the past for joining vessel hull sections.

Large underwater grids have been used under floating dry docks to stabilize them as ships were transferred off a floating dry dock onto land, or from land onto a floating dry dock. A ship construction facility known as the Ingalls launching pontoon uses this technique.

The task of inspecting and maintaining conventional double-bottomed vessel hulls incorporated in carriers for bulk fluids and/or particulate material such as oil, liquified gases, chemicals, ore and grain is difficult. With traditional egg crate-like stiffening structures provided longitudinally and transversely between the bottoms, the process is one of climbing-over, ducking-under and squeezing through girders and plates in a constantly couched position, with poor ventilation (unless "moon suits" are worn), poor footing, little to hold onto for support, while needing to carry illumination means, and trying one's best to locate anomalies in surfaces the expected color of which is itself dirt colored or rust colored.

In prior patent specification US-A-2353260 (Paulsen) there is disclosed a method of metal plate construction for use in prefabricating ships in parts. The invention comprises the use, in forming the outer shell, the decks, the bulkheads, tank tops, and other parts of the hull, of steel plates which have their marginal areas flat and disposed in a single plane as usual, but with their intermediate areas dished, bulged, buckled, swamped or bent to form one or more areas having sufficient convexity at one surface and sufficient concavity at the other surface to impart increased resistance to bending. The invention also provides a novel welded seam for use in building ships out of prefabricated sections. In an example, two bottom shell plates are placed horizontally with a side girder standing on edge beneath and supporting the meeting line of the two plates, and with a space between the meeting edges of the two plates which is bridged by a flange on the edge of the girder. A welding machine is then placed on the upward surfaces of the shell plates and is run down the seam, welding the three parts together. An example is shown of a double bottomed vessel hull produced in such a way.

In accordance with the present invention, in a first main aspect, there is provided a vessel hull structure comprising: a vessel hull structure comprising: a first set of elongate plates welded to one another in series at joints along respective adjoining longitudinal edges of the plates to provide an outer hull structure having a bottom and two laterally opposite sides; a second set of elongate plates welded to one another in series at joints along respective adjoining longitudinal edges of the plates to provide an inner hull structure; a set of longitudinal rib plates welded between said inner and outer hull structures along respective inner and outer longitudinal edges of the rib plates at positions adjacent respective said joints of said inner and outer hull structures; and a transverse bulkhead; characterised in that the vessel hull structure is a double-hulled structure in which the said inner hull structure has a bottom and two laterally opposite sides and is arranged within the said outer hull structure with the respective bottoms and sides of the hull structures spaced apart, each said longitudinal edge of a plate being an edge which terminates the plate at a depth substantially equal to the thickness of the respective plate, and each longitudinal rib plate being positioned in register with a respective joint between adjacent plates of the outer hull and in register with a respective joint between adjacent plates of the inner hull, at each said joint the three joined longitudinal edges being welded together by a single weld extending between each edge and the two remaining joined edges.

Preferably each plate of the said first and second sets of plates is an outwardly convex, cylindrically arcuate plate.

In one preferred form, it is arranged that the outer hull has an interruption, located medially of said bottom of said outer hull; and the inner hull has an interruption, located medially of said bottom of said inner hull; and there is provided a medially arranged, longitudinally extending duct keel disposed in both said interruptions and weldedly joined to longitudinal edges of respective adjoining plates of said first and second sets of plates.

Preferably, the said inner hull and outer hull have two longitudinally opposite ends and said bulkhead is provided at one of said ends of said inner hull.

There may also be provided in accordance with the invention a parallel midbody for a vessel hull comprising a plurality of like modules serially weldedly connected end-to-end to provide a parallel midbody, each said module comprising a hull structure as set out in the previous paragraphs.

There may further be provided a vessel hull comprising a midbody as set out in the previous paragraph, a vessel hull bow section weldedly connected to one end of said midbody, and a vessel hull stern section weldedly connected to the opposite end of said midbody.

Conveniently each module is about 50 feet in length and said inner hull is spaced about 2 meters from said outer hull at the bottom, sides and bilges of said parallel midbody.

In preferred forms, of structures according to the invention, each rib plate is provided on one face thereof with a plurality of laterally projecting kick plate stiffeners spaced from one another longitudinally of said inner and outer hulls and each extending from adjacent said inner hull to adjacent said outer hull. Preferably each rib plate is provided with at least one lightening hole opening therethrough laterally of said inner and outer hulls longitudinally between a respective adjacent two of said kick plate stiffeners.

In a preferred form of a vessel hull structure according to the invention said inner and outer hulls and rib plates are constituted of four substantially identical subassemblies, comprising: starboard and port bottom subassemblies which are mirror images of one another, respectively joined edgewise with said duct keel and with starboard and port sidewall subassemblies which are mirror images of one another. Preferably said sides of said inner and outer hulls have upper edges and a deck structure bridging between and connecting said starboard and port sidewall assemblies at said upper edges of said inner and outer hulls. Also preferably at respective transitions between the bottom and sides of each of said inner and outer hulls and said inner and outer hulls have bilge radii which approximate in size of the radii of curvature of others of said cylindrically arcuate steel plates in respective of said hulls, including ones both adjacent to and remote from said transitions.

In accordance with another preferred feature, there may be provided a parallel midbody as set out above for a double-hulled vessel, in which each first plate is substantially rectangular in plan so as to have two long edges and two short edges, and is curved by being arcuate about an axis that is substantially parallel to said long edges, each second plate is substantially rectangular in plan so as to have two long edges and two short edges, and curved by being arcuate about an axis that is substantially parallel to said long edges, and each rib plate is arranged between said inner and outer hulls with one long edge thereof juxtaposed with a plate-to-plate joint site of said outer hull, and the other long edge thereof juxtaposed with a corresponding plate-to-plate joint site of said inner hull, so that three long edges of three different ones of said plates are juxtaposed at each plate-to-plate joint site; at each said plate-to-plate joint site, the respective said three long edges being welded together to provide a respective welded T-joint.

In accordance with another preferred aspect of the invention, there may be provided a parallel midbody as set out in broad terms hereinbefore, characterised by the substantial absence of transverse reinforcement between said inner and outer hulls but for said bulkheads.

When putting the present invention into effect there may be used a longitudinal subassembly fixture for fabricating subassemblies for modules for a parallel midbody for a double hull vessel, said fixture comprising: three rows of vertical towers having fixed bases, including one inner row, and two outer rows located on opposite sides of said inner row; each tower in said inner row having four working faces, including two facing respective ones of said outer rows, and two facing in opposite directions along said inner row; each tower in said outer rows having one working face facing towards said inner row; each working face having mounted thereto a respective frame means arranged in pairs; each frame means in each pair being mounted to the respective tower by jack means for movement towards and away from the respective tower, and within each pair of frame means, the two respective frame means being provided with complementary surfaces for engaging and holding between them a respective plate; and means mounted to said towers for welding vertical T-joints between respective abutting edges of respective groups of three plates while two of such plates are engaged and held between adjoining pairs of frame means.

It may be arranged that each said pair of frame means which includes one frame means mounted to a tower in an outer row and another frame means mounted to a tower in said inner row has said complementary surfaces thereof configured for engaging and holding a plate which is cylindrically arcuate about a vertical axis.

It may also be arranged that the pairs of said frame means which are mounted between the towers in one of said outer rows and the towers in said inner row, and the pairs of said frame means which are mounted between the towers in the other of said outer rows and the towers in said inner row all have the complementary surfaces thereof oriented to hold respective curved plates so that the curvatures thereof are all convex in the same direction.

In a preferred form said means for welding vertical T-joints comprises, for each T-joint, a vertically travelling electroslag welder, and two cooling shoes, one mounted at each of two respective corners of adjoining ones of said inner row towers.

In accordance with the invention in a further main aspect, there may be provided apparatus for assembling a bulkhead with a plurality of longitudinal subassemblies for a module for a parallel midbody for a double hull vessel to provide said module, the module comprising a hull structure according to the invention as set out in previous paragraphs, the apparatus comprising: an underwater grid of upright pilings providing a submerged support surface means; a variable buoyancy barge overlying said submerged support surface and being adjustable between a floating mode in which said barge is floating above said submerged support surface and therefore is susceptible to being rotated about a vertical axis, and a sink mode, in which said barge is firmly grounded on said submerged support surface; means for supporting a horizontally extending bulkhead on said barge; a derrick for lifting and depositing on the barge a succession of longitudinal subassemblies for a module for a parallel midbody for a double hull vessel said derrick being adapted to lift said subassemblies singly and set each in place on said barge around the perimeter of said bulkhead, whereby said barge may be floated and rotated between uses of the derrick to place said subassemblies successively thereon, and may be disposed in said sunk mode while each subassembly is loaded thereonto by said derrick, and whereby said subassemblies may be welded to one another and to said bulkhead while disposed on said barge.

It may be arranged that said submerged support surface is located near but spaced from a module joining facility arranged for supporting a growing midbody of said modules serially connected in a horizontally extending series as modules are successively joined to said growing midbody; a body of water communicating said submerged support surface with said module joining facility, whereby upon completion of assembly of a module on said barge, said barge, with such module thereon, may be floated away from said submerged support surface and sunk leaving such module floating whereby such module is transferred from a vertical orientation to a horizontal orientation by selectively flooding such module with salt water utilizing apparatus of and such module in its horizontal orientation floated to juxtaposition with said module joining facility.

Conveniently said module joining facility includes a horizontally elongated submerged support structure intersected by a pontoon caisson which is constructed and arranged to expose for welding together an end of said transferred module and an end of said growing midbody.

It is to be appreciated that where aspects of the invention have been described with reference to various forms of structure and apparatus, these features may also be provided in accordance with corresponding methods, and vice versa.

In particular there may be provided in accordance with the present invention a vessel hull construction method, comprising: providing a first set of elongate plates serially arranged edge-to-edge along longitudinal edges thereof; (b) providing a second set of elongate plates serially arranged edge-to-edge along longitudinal edges thereof; (c) providing a further set of elongate plates between the first and second sets, each plate of the further set having one longitudinal edge disposed adjacent the longitudinal edges of two adjoining ones of said plates in said first set and an opposite longitudinal edge disposed adjacent the longitudinal edges of two adjoining ones of said plates in said second set; and (d) providing welds between respective plates to form a double-walled vessel hull structure; characterised in that the plates are welded together by the steps of: holding each said plate in a vertical orientation by engagement with both opposite faces thereof for maintaining the plates in a desired shape and position defining a vertically extending T-joint site for each junction of said plates; welding a respective T-joint at each said T-joint site by vertically travelling welding means, while holding said plates; and releasing said plates from being held.

In accordance with a further aspect of the invention there may be provided a double-walled sub-assembly for a vessel hull construction, comprising: a first set of elongate plates welded to one another in series at joints along respective adjoining longitudinal edges of the plates; a second set of elongate plates welded to one another in series at joints along respective adjoining longitudinal edges of the plates, the first and second sets of plates being spaced apart from each other; a further set of elongate plates welded between the first and second sets of plates along respective longitudinal edges of the further plates at positions adjacent respective said joints of said inner and outer hull structures; characterised in that each said longitudinal edge of a plate is an edge which terminates the plate at a depth substantially equal to the thickness of the respective plate, and each plate of the further set is positioned in register with a respective joint between adjacent plates of the first set and in register with a respective joint between adjacent plates of the second set, at each said joint the three joined longitudinal edges being welded together by a single weld extending between each edge and the two remaining joined edges.

In accordance with another aspect of the invention there may be provided a method of producing a sub-component for joining to other sub-components in a vessel hull construction method, comprising: providing a pair of elongate plates arranged edge to edge along longitudinal edges thereof, providing a further elongate plate having a longitudinal edge disposed adjacent the longitudinal edges of the said two adjoining plates, and welding the three plates together, characterised in that the plates are welded together by the steps of: holding each plate in a vertical orientation by engagement with both opposite faces thereof for maintaining the plates in a desired shape and position defining a vertically extending T-joint site for the junction of said plates; welding a T-joint at the said vertically extending T-joint site by vertically travelling welding means, while holding said plates; and releasing said plates from being held.

In accordance with another aspect of the invention there may be provided a method of producing a sub-component for joining to other sub-components in a vessel hull construction method comprising: providing a first pair of elongate plates arranged edge-to-edge along longitudinal edges thereof; providing a second pair of elongate plates arranged edge-to-edge along longitudinal edges thereof; providing a further elongate plate having one longitudinal edge disposed adjacent the longitudinal edges of the first pair of plates and an opposite longitudinal edge disposed adjacent the longitudinal edges of the second pair of plates and providing welds between respective plates, characterised in that the plates are welded together by the steps of: holding each plate in a vertical orientation by engagement with both opposite faces thereof for maintaining the plates in a desired shape and position defining a first vertically extending T-joint site at one longitudinal edge of the further rectangular plate, and defining a second vertically extending T-joint site at the said opposite longitudinal edge of the said further rectangular plate; welding a respective T-joint at each said vertically extending T-joint site by vertically travelling welding means, while holding said plates; and releasing said plates from being held.

The method may further comprise: (e) repeating steps (a) - (d) a plurality of times to provide a plurality of like subassemblies; (f) arranging said plurality of said subassemblies in a series around a bulkhead; and (g) welding corresponding edges of corresponding plates on adjoining ones of said subassemblies to one another and welding said subassemblies to said bulkhead to thereby provide a double-hull module having a floor portion and two laterally opposite side portions.

Preferably steps (f) and (g) are conducted while said steel plates, and therefore said module, remain vertically oriented.

Also preferably steps (a) - (e) are conducted in a land-based fixture, and steps (f) and (g) are conducted on board a variable buoyancy barge, which the aid of a floating derrick which successively lifts individual ones of said subassemblies from said fixture and later places them on said barge in said series around said bulkhead; and wherein said barge is sunk onto a fixed support each time a subassembly is to be placed thereon, and between at least sometimes that two subassemblies are successively placed thereon, said barge is increased in buoyancy so as to float above said fixed support and is floatingly shifted in order to bring a site where a next subassembly will be placed, into more convenient disposition relative to said land-based fixture.

It is further preferred that said welding of said T-joints is accomplished by electroslag welding, with cooling being provided along both faces of each plate in said second set as the respective T-joint is being welded. Preferably said welding of said T-joints is accomplished by electrogas welding, with cooling being provided along both faces of each plate in said second set as the respective T-joint is being welded. Also preferably in step (c), all of said T-joints are simultaneously welded at all of said T-joint sites.

It is also preferred that said holding of step (c) and said releasing of step (d) are respectively accomplished by setting and releasing hydraulically operated horizontally acting jacks mounted to respective towers.

Preferably the method further comprises: (h) repeating steps (a) - (g) a plurality of times to thereby provide a succession of like modules: (i) tilting-over each module to a horizontal disposition, bottom downwards; and (j) serially welding said modules together end-to-end, thereby providing a double-hulled vessel parallel midbody having two opposite ends. Also preferably the (k) welding a vessel hull bow section to one end of said midbody and a vessel hull stern section to the opposite end of said midbody, thereby providing a double-hulled vessel.

Preferably steps (a) - (e) are conducted in a land-based fixture, and steps (f) and (g) are conducted on board a variable buoyancy barge, with the aid of a floating derrick which successively lifts individual ones of said subassemblies from said fixture and places them on said barge in said series around said bulkhead: wherein said barge is sunk onto a fixed support each time a subassembly is to be placed thereon, and between at least sometimes that two subassemblies are successively placed thereon, said barge is increased in buoyancy so as to float above said fixed support and is floatingly shifted in order to bring a site where a next subassembly will be placed, into more convenient disposition relative to said land-based fixture; and step (i), conducted successively for each module, comprising sinking said barge differentially flooding the floating module so as to partially tilt the module; temporarily fitting the module with further walls to permit the module to float in a horizontal position; using a derrick to encourage and restrain tilting of the partially tilted module until the module is horizontal and floating.

Preferably the method further comprises: providing a submerged support on which said succession of modules can be subject to step (j); and, between steps (i) and (j) floating each tilted-over module into place over said submerged support and sinking it onto said submerged support.

Further preferably the method comprises: providing a pontoon-type caisson which intersects said submerged support at an intermediate location along said submerged support, conducting step (j) in said caisson for providing each module-to-module joint, and between providing each two successive module-to-module joints shifting the resultingly growing midbody along said submerged support so as to dispose a respective end of the growing midbody within said caisson.

The present invention provides, at least in preferred forms, a simplified double-bottomed vessel hull structure preferably using slightly curved inner and outer hull plating, in combination with widely spaced girders. The plate curvature substantially reduces the need to locally reinforce the hull plating against buckling. In many instances, transverse reinforcing structure, except for bulkheads, can be omitted from the midbody.

Yet further preferred and optional features and combinations of features will now be described. It is particularly to be appreciated that the following statements relate only to preferred or optional or exemplary features and do not set out essential features of the invention.

A ducted keel, which is preferably provided, preferably contains all fore and aft ballast piping. Cargo piping preferably is run through the transverse bulkheads above the inner bottom. Ventilation of the double-hull compartments can be provided by portable mechanical blowers mounted above deck, onto vertical standpipes which connect into the ballast tank transverse piping.

The preferred absence of transverse structure except for the bulkheads eliminates a major cause for inner hull failure in the event of tanker grounding. (Transverse structure, if provided, being transverse to the direction of travel is subject to deflecting aft at the base during grounding, tending to tear the inner hull to which it is attached.)

The double hull construction provided in accordance with the preferred embodiment can be realised with less welding and burning in later production stages. This permits fully enclosed and automated shot blasting and painting of much of the surface during early stages of production. As a result of painting being performed under more closely controlled environmental conditions, the initial coating has a longer life and release of abrasive blasting dust and paint solvents to the atmosphere can be significantly reduced.

The principles of the present invention may be used to provide a double-hull vessel which utilizes an amount of steel that is comparable to that needed for construction of a conventional single-hull segregated ballast tanker of the same size, whereas double-hull tankers of conventional construction require 5 to 15 percent more steel.

The principles of the invention may be used for converting existing single hull tankers by midbody replacement with double-hull midbodies produced in accordance with the present invention, and reuse of the pre-existing bow and stern sections, thus recovering useful life from existing structures which might otherwise need to be scrapped.

As presently contemplated, the principles of the invention can be used to provide a hull for a vessel as large as a 300,000 DWT tanker. The vessel preferably includes a double hull not only on the bottom, but also on the sides. Inner hull spacing from the outer hull at the sides and bottom may be as much as 7 feet, 3 inches (i.e., slightly greater than 2 meters). Transverse bulkheads are provided every 40-60 feet, e.g., 48 feet along the length of the midbody. Longitudinal girders are spaced 8 feet apart.

When designing a double-hull vessel having a preferred standard interbottom spacing of, e.g., about 2 meters, and 8-foot girder spacing, using the principles of the present invention, the capacity may be readily customized from 80,000 to nearly 300,000 DWT by adjusting for differences in vessel beam and depth, through a combination of adding or deleting 8-foot wide modules, varying the size of keel and main deck centerline structure and deck edge box girders (all of which may be of conventional construction). Other design modules can be used with greater or lesser dimensions of inner bottom spacing, girder spacing and transverse bulkhead spacing to accommodate designs for vessel sizes from the smallest to the largest double hull tankers or barges.

In the preferred construction, the interhull spacing is made no more than about 2 meters in order to limit the loss of buoyancy should the outer hull be punctured. Further, the longitudinal girder at the top of the bilge preferably is made tight, thereby creating separate side and bottom ballast tanks. This preferred structure will permit rapid evacuations of a flooded interbottom using compressed air, so as to create a buoyancy-providing air bubble between the hulls above the damaged outer hull plating.

In a ship which utilizes curved hull plating, the construction method of the present invention eliminates all transverse structure in the midbody (except for transverse bulkheads), by utilizing a bilge radius which is similar to the radius of curvature of the curved hull plating. A novel structure of underdeck longitudinal girders also is preferably provided.

Recurvature of curved plates formerly thought to be needed or desirable according to the aforementioned U.S. patent of Tornay is avoided, with resulting savings, by instead aligning and welding longitudinal girders into longitudinal weld seems of curved inner and outer hull plating at T-joints.

The double hull thus has steel plate as its primary structural members, with the need for longitudinal T-bars, I-beams and similar structural shapes being avoided.

The invention provides a novel method for constructing the double-hulled midbody of a cargo tanker by fabricating module subassemblies vertically in a fixture, assembling the subassemblies into a module vertically, launching each module vertically then righting each module and joining each successively to the growing structure, with conventional bow and stern sections being joined to the opposite ends of the midbody. Each module preferably is approximately 50 feet tall as fabricated, and therefore about 50 feet long when righted.

Each module may incorporate six similar, if not identical, module subassemblies, thereby permitting a high degree of standardization of steel parts in the cargo tank sections of double hull tankers.

(The term "tanker" is used generically herein, without regard to whether the vessel will carry liquid, gaseous and/or particulate solid material or any combination thereof.)

The vessel hull and construction method of the present invention uses less steel than is conventionally used for producing a double-hulled tanker of the same DWT capacity, requires less labor hours per ton of steel fabricated into hull, can use a higher percentage of automatic welding, including vertical electroslag and/or electrogas welding (with resulting higher quality and lower cost), reduces the need for higher-cost steel shapes such as I-beams and T-bars, substantially reduces the absolute number of pieces of steel which must be handled and assembled (thereby significantly reducing cost and time), reduces total welding necessary, facilitates and reduces the cost of blasting and painting (and abatement of environmental impact of these processes), and permits improvement in the quality of finished painting for the vessel hull.

In a tanker which has hull plating that is curved, hydrostatic forces and liquid cargo or ballast pressure cause a deflection perpendicular to the curved plate which, in turn, causes lateral deflection at the edges of the plate. The lateral forces created in this manner are offsetting at the edges of two adjacent plates which are in the same lateral plane, but at the lower corners (bilges) where the additive lateral deflections are maximum, either the longitudinal bilge structure would need to be massive in order to transmit the resulting lateral forces to the transverse bulkheads, or intermediate transverse structure between bulkheads would be needed, according to conventional design.

A novel aspect of the present invention is that by utilizing a bilge radius for both inner and outer hull which is approximately the same as the radius of curvature of the other plating, the lateral forces caused by the additive lateral deflections can be transferred to the transverse bulkheads through reasonable-thickness bilge plating only.

The elimination of all transverse reinforcement of inner and outer hull except for bulkheads is possible for the entire length of the hull which is built parallel (the so-called "parallel midbody"), which comprises about 75 percent of the length of the cargo tank section of a typical tanker. Toward the bow and stern of the vessel where the hull shape curves inward, the bilge radius necessarily has to be made larger in order to maintain fairness of hull lines. This particular area needs to have either intermediate transverse structure or massive bilge structure if the curved hull plating is retained. (One alternative is to convert existing tankers by replacing only the parallel midbody portion and retaining the shaped ends made up of conventional flat hull plating and transverse structure.

Embodiments of the invention will now be described by way of example with reference to the accompanying drawings, in which:-
Figure 1 is a schematic top-plan view of a production line for prefabricated panels for double-hull module longitudinal subassemblies;
Figure 2 is a pictorial view of a flame planer of the production line shown in Figure 1;
Figure 3 is a pictorial view of a flame bender of the production line shown in Figure 1;
Figure 4 is a pictorial view of a robotic installation and tack welding station for providing longitudinal panels with kick plate stiffeners on the production line shown in Figure 1;
Figure 5 is a pictorial view of a station for coating the tops and bottoms of panels with paint on the production line shown in Figure 1;
Figure 6 is a pictorial view of a barge loaded with one module's complement of longitudinal panels as produced on the production line shown in Figure 1, ready for movement to a subassembly area;
Figure 7 is a pictorial view of a subassembly area;
Figure 8 is a pictorial view of a longitudinal subassembly fixture at the longitudinal subassembly area shown in Figure 7;
Figure 9 is a top-plan view of the longitudinal subassembly fixture;
Figure 10 is a larger scale fragmentary top-plan view of the longitudinal subassembly fixture;
Figure 11 is a pictorial view showing workers installing a panel in the fixture of Figures 8-10;
Figure 12 is a fragmentary pictorial view of the top of the longitudinal subassembly fixture showing bar supports on rollers at the tops of individual outside towers thereof;
Figure 13 is a pictorial view similar to Figure 12 showing the hanging basket-type staging device used at each T-joint intersection of longitudinal panels for cleaning and welding of the joints;
Figure 14 is a pictorial view showing the apparatus of Figure 13 being used to create a welded T-joint at the intersection of two hull plates and a longitudinal stiffener plate;
Figure 15 is a pictorial view showing the longitudinal subassembly fixture after welding of the panels into a hull midbody module has been completed and the hydraulic jacks have been released, allowing a floating derrick to remove the module to a touch-up, blast and final paint room of the subassembly area shown in Figure 7;
Figure 16 is a pictorial view of a module assembly pontoon fixture with a bulkhead subassembly already positioned thereon, and individual fully painted hull midbody modules being placed thereon by a floating derrick;
Figure 17 is another pictorial view of the apparatus shown in Figure 16, from a different perspective, after another hull module has been put in place on the bulkhead assembly on the module assembly pontoon fixture;
Figures 18A-18E are a series of five side-elevational views, partly in section, of erection (tilting over from a vertical orientation to a horizontal orientation of a hull midbody module, which is then floated towards a module joining facility for joining to previously positioned structure);
Figure 19 is a side-elevation view of the module erection pontoon and supporting grid with separate view of sinking the module erection pontoon to float the module;
Figure 20 is a pictorial view of the module joining facility, at a later stage than depicted in Figures 18 and 19, and with the water omitted so as to show the supporting structure and module-joining pontoon caisson;
Figure 21 is a transverse-sectional view of the module joining facility;
Figure 22 is a side-elevational view of the module joining facility;
Figure 23 is a transverse sectional view of the module joining facility at the location of the module joining pontoon caisson.
Figure 24 is a transverse cross-sectional view of a double-hulled vessel, through the midbody thereof, constructed in accordance with principles of the present invention, a bulkhead being illustrated in the left half of the view;
Figure 25 is an enlarged scale fragmentary transverse cross-sectional view thereof showing the region where two longitudinal hull subassemblies join a duct keel;
Figure 26 is an enlarged scale fragmentary transverse cross-sectional view of the vessel hull of Figure 24, showing the region where two longitudinal hull subassemblies join one another at the bottom-to-side transition; and
Figure 27 is an enlarged scale fragmentary transverse cross-sectional view of the vessel hull of Figure 24, showing the region where a longitudinal hull subassembly joins the underside of the outer margin of the deck structure (whicn may be conventional, as may be the bow and stern sections of the vessel).

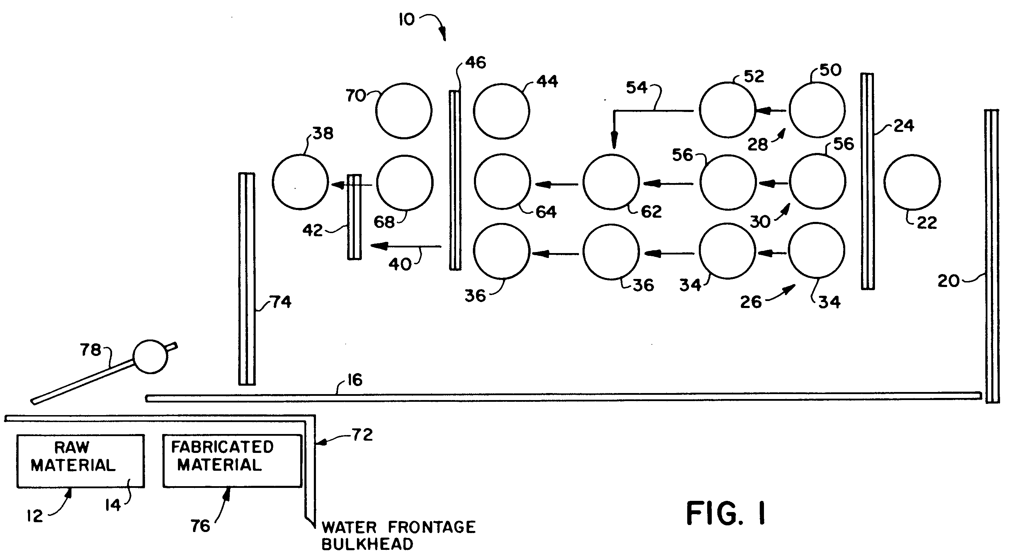

Production of the double-hulled vessel midbody for a vessel hull of the present invention preferably begins on the production line that is schematically depicted at 10 in Figure 1.

Raw steel plate, most of it 0.5 to 1.0 inch thick and approximately 8 feet wide and 48 feet long is procured from a steel mill, received by barge 12 and stored flat as raw material 14. As processing begins, steel plates are individually transferred from the barge 12 onto a roller conveyor 16 using an electromagnet-type grasping device-equipped crane (not shown). At the opposite end of the conveyor 16, the steel plates are transferred to a trolley car 20 which takes them to a steel shot abrasive cabinet 22 where mill scale is conventionally removed from the plate. A further trolley car 24 transfers the descaled plates to one of three fabricating lines 26, 28, 30.

The line 26 processes about 45 percent of the incoming tonnage of plates 14 and produces curved longitudinal panels 32.

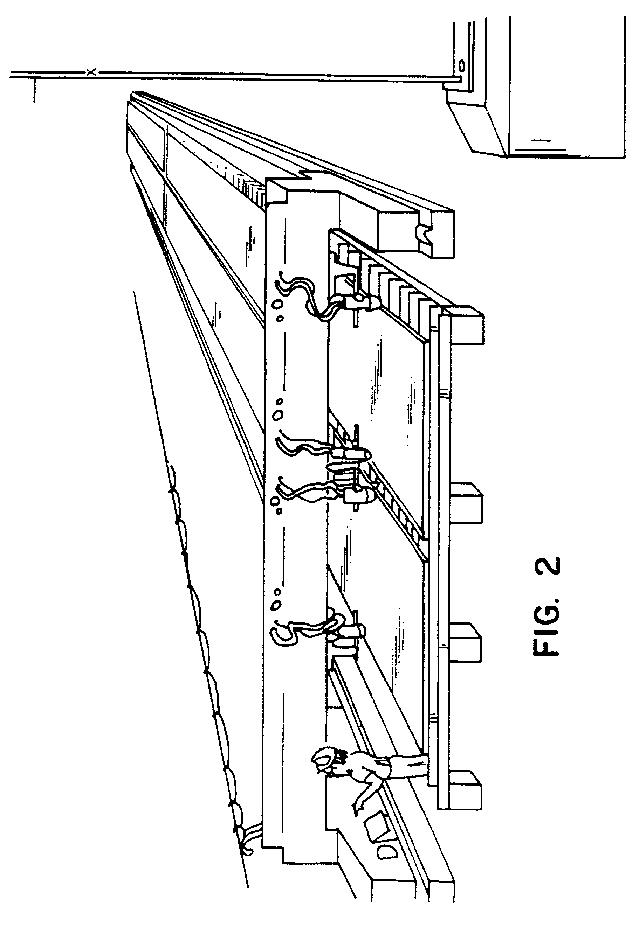

First, plates 14 are cut to desired final dimensions using conventional flame planers 34 (Figures 1 and 2).

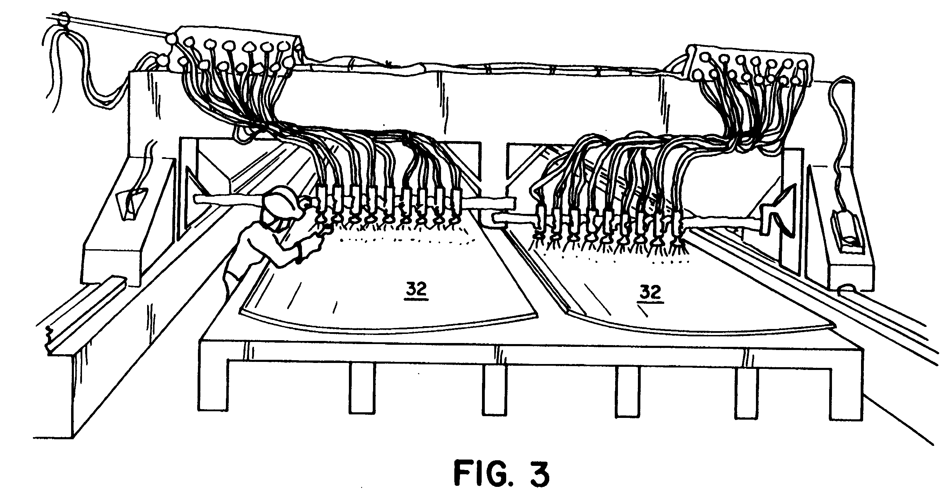

Next, the trimmed plates are formed into panels 32 having the desired curvature using a conventional flame benders 36 (Figures 1 and 3).

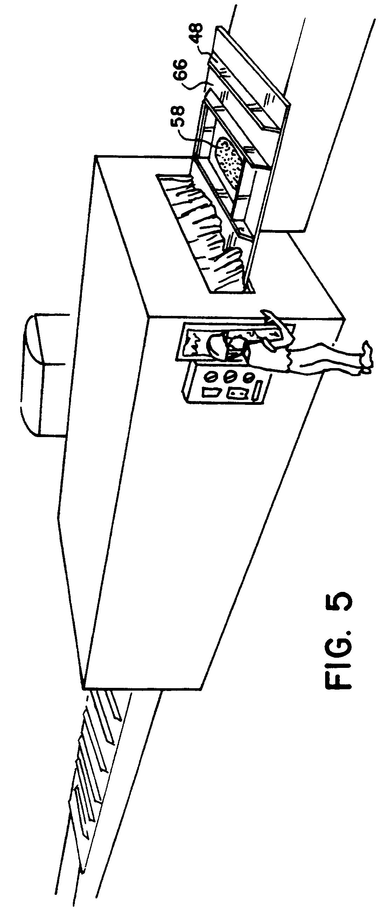

Acceptable curved panels 32 are transferred to a painting station 38 (Figures 1 and 5) via conveyor 40 and trolley car 42.

Curved panels requiring further work are transferred to a repair station 44 by a trolley car 46 and, upon completion of repairs, transferred back into the normal curved panel production line and further processed as acceptable curved panels.

The line 28 processes about 10 percent of the incoming tonnage of plates 14 and produces kick plate stiffeners 48 for the flat longitudinal panels 66.

On the line 28, the plate is flame cut at 50 into strips of desired width (e.g., approximately 6 inches in width), and then sheared at 52 to the desired length and 45-degree end configuration. The completed kick plate stiffeners 48 are conveyed at 54 to an intermediate station on the flat panel production line 30.

On the line 30, plate 14 is cut at 56 to the desired final dimensions and configuration using an automatic burning machine (for cutting out lightening holes 58).

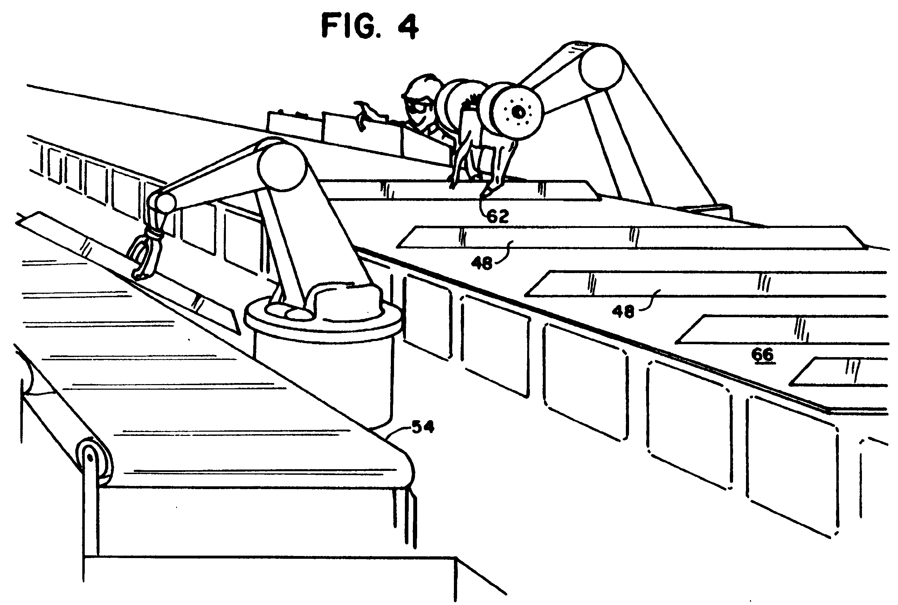

Kick plate stiffeners 48, including lightening hole reinforcements 60 are installed and tack welded robotically at 62 (Figures 1 and 4), then finish welded robotically at 64.

Acceptable flat longitudinal panels 66, with their kick plate stiffeners 48 and lightening hole reinforcements 60 welded in place are run through a steel shot abrasive cabinet 68 where welded areas are spot-blasted (Figure 5).

Flat longitudinal panels requiring repair are shuttled via trolley car to a repair area 70, repaired, and shuttled back to the touch-up blast cabinet 68 and thereafter forwarded as acceptable flat longitudinal panels.

At the painting station 38 (which may be one station serving both lines 26 and 30), the tops and bottoms of the curved and flat panels 32, 66 are coated with a first primer coat of paint, with several inches along each edge left unpainted to facilitate future welding. (The specific coating applied at this stage depends on whether the surface in question, in use, will face cargo, ballast, the external environment underwater or freeboard, or main deck service.)

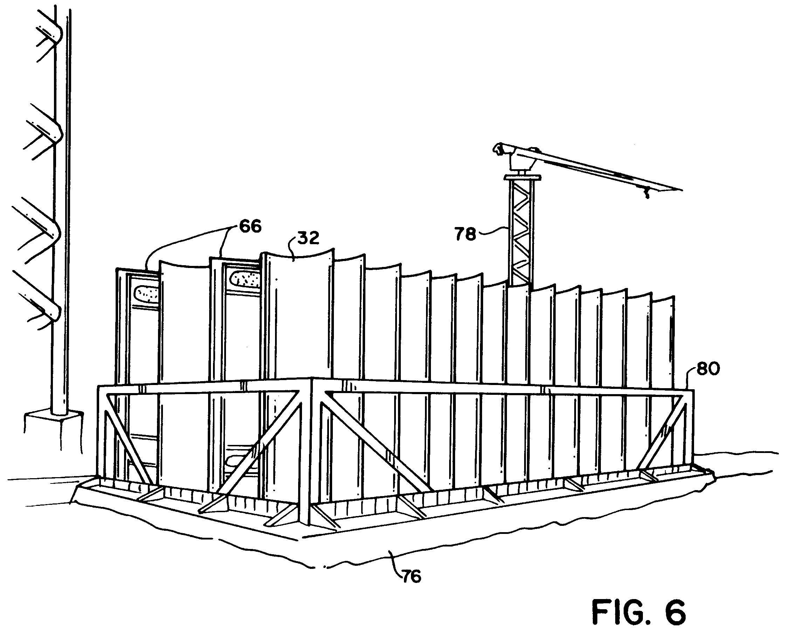

The painted curved and flat longitudinal panels are transferred to the pier 72 by means of a chain conveyor 74 and loaded aboard a barge 76 using a crane 78 (Figure 6). Each barge 76 is provided with rack means 80 which permit one module's worth (with a few spares), of curved panels 32 and flat panels 66 to be loaded aboard in vertical orientation.

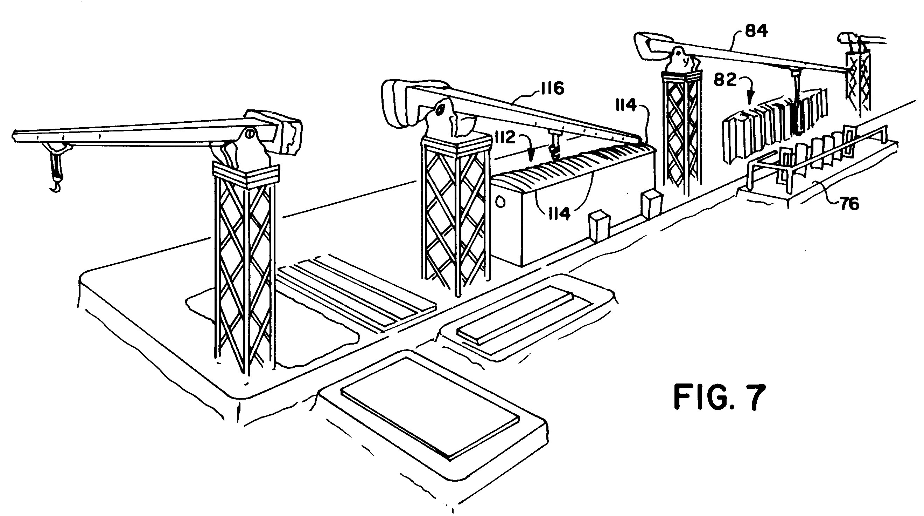

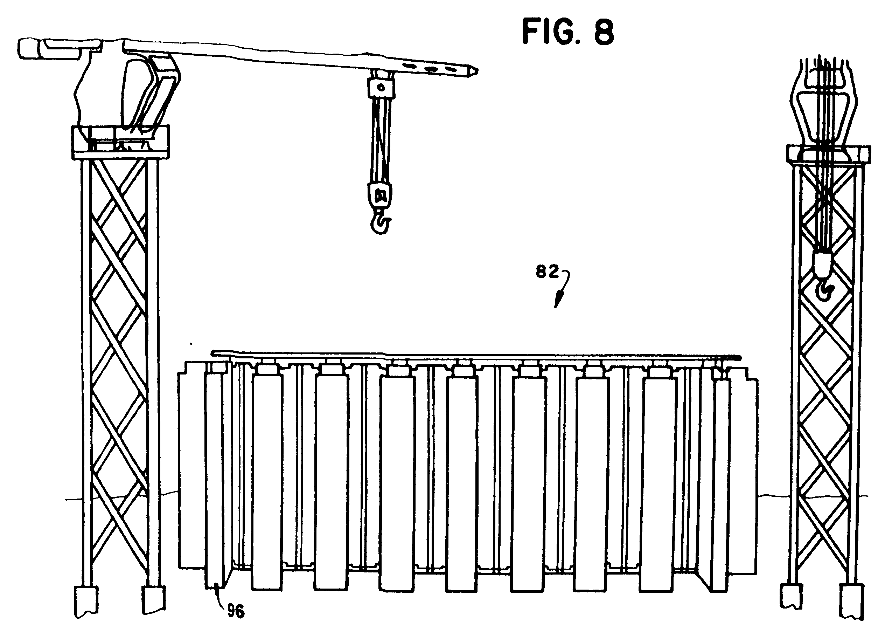

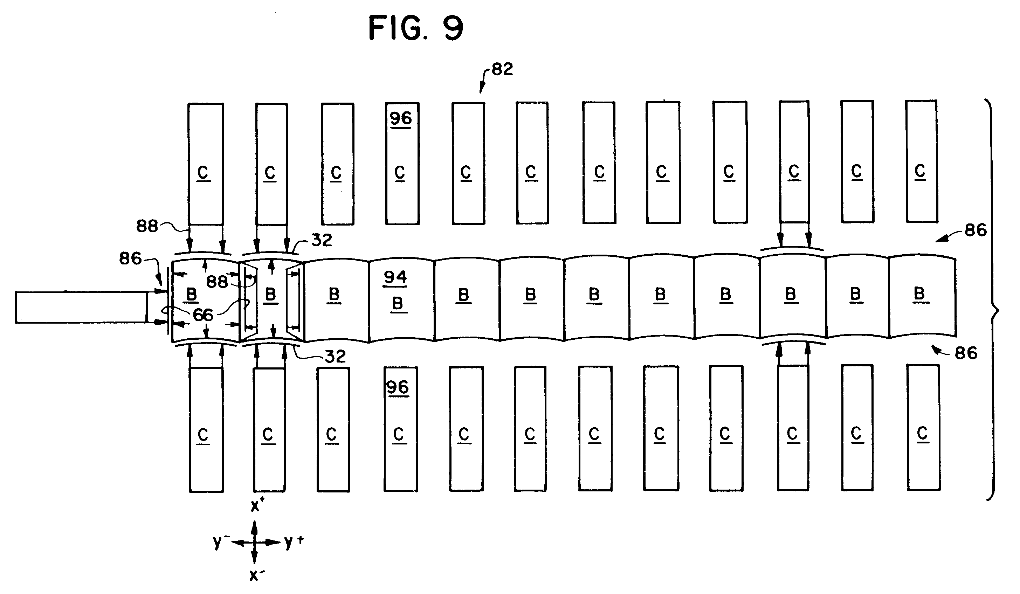

A barge 76, when fully loaded with module panels 32, 66, is moved to the subassembly area (Figure 7) so as to be located alongside the primary longitudinal subassembly fixture 82. At this site, the vertical longitudinal panels 32 and 66 are lifted from the barge 76 using a crane 84 and inserted vertically into respective slots 86 in the fixture 82. After all of the panels 32, 66 which are needed for constituting one longitudinal subassembly are located in the respective slots 86, hydraulic jacks 88 (Figure 8) confronting each panel from each side and having respectively shaped contact pads 90 (Figure 9) are energized for properly conforming and positioning each panel so that its edges 92 are juxtaposed with those of two others at a "T" (except at subassembly ends, where two panel edges meet at an "L").

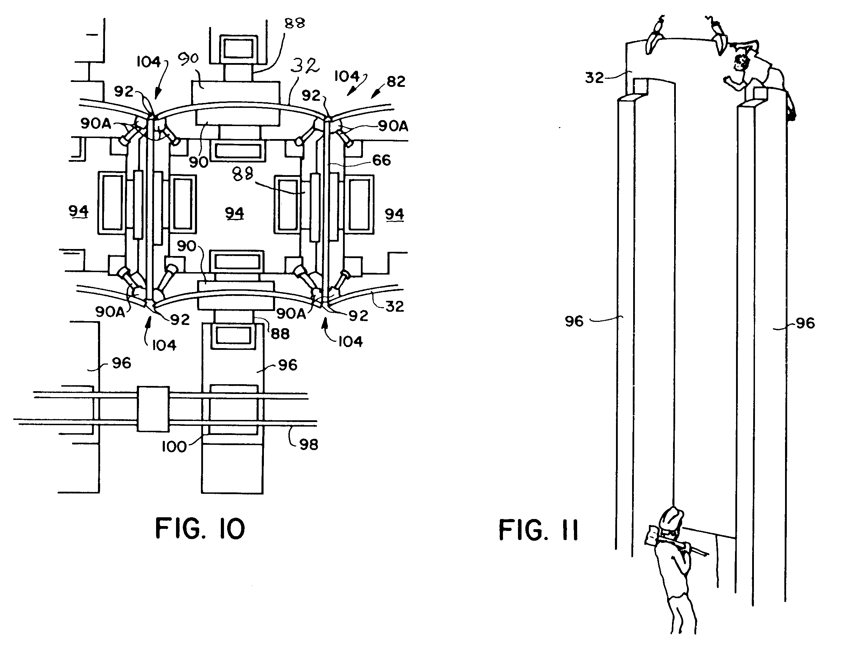

Jacking elements of individual interior towers 94 and exterior towers 96 (Figures 7-12) of the longitudinal subassembly fixture may be removed for repair, routine maintenance and adjustment to different dimensions and configurations, as needed.

Each tower 94, 96 is somewhat taller than the distance between bulkheads in the parallel midbody of the double-walled vessel hull that is to be built using the apparatus and process of the present invention (e.g., somewhat in excess of 50 feet tall).

Each tower 94, 96 may be constructed by driving into the ground four to six pilings (not shown) made of steel or reinforced concrete. Steel frames (i.e., pads) 90 are aligned and mounted to each tower at regular intervals (e.g., of 2-4 feet) along the height of each tower.

The towers 94, 96 are of two different functional types (Figure 9). Exterior towers 96 are of a "C"-type; each is active in the +X or -X direction, depending on whether it confronts an interior tower 94 from one side or the other. Interior towers 94 are of a B-type which is active in +X, -X, +Y and -Y directions. On the interior towers, the pads 90 face in the +X, -X, +Y and -Y directions (except at the two ends of the fixture, where two C-type towers are externally provided, one active only in the +Y direction and the other active only in the -Y direction). On interior towers 94 the Y-facing steel frames are mounted to the towers via horizontally extensible-retractile hydraulic rams 88.

In use, when the fixture 82 is empty, all rams 88 for the steel frames of all towers 94 and 96 are retracted, allowing the various curved panels 32 and flat panels 66 to be lowered into place. As the rams 88 are then extended, the curved plates are jacked by steel frames on the exterior towers against the reactive steel frames jacked against the interior towers, and the flat plates are jacked by the steel frames on the interior towers against the reactive steel frames jacked against adjacent interior towers. Water cooled welding backing shoes 90A capable of being retracted and extended are installed at each corner of each interior tower 94.

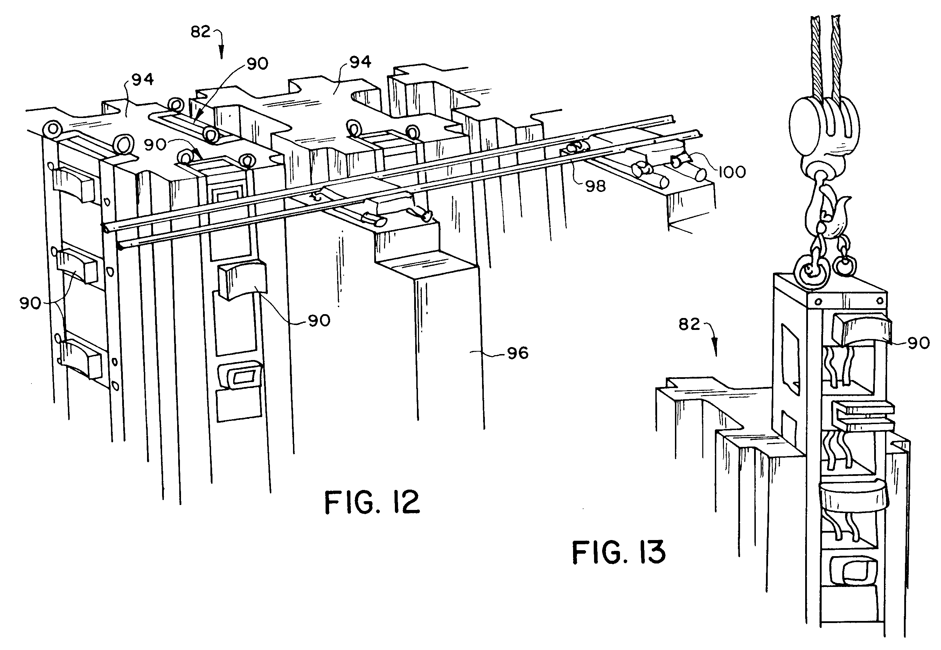

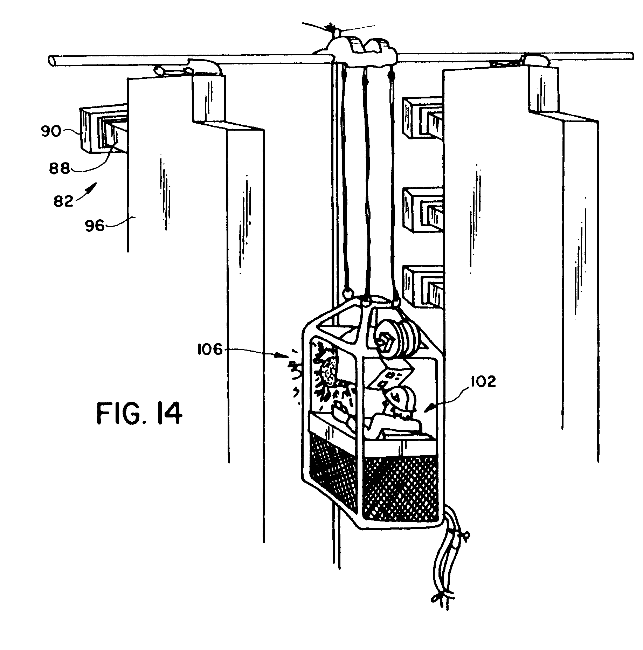

Bar supports 98 on rollers 100 are located at the top of the individual outside towers 96 of the longitudinal subassembly fixture 82 (Figure 12). The purpose of the bar supports 98 is to provide an adjustable support location for a hanging basket-type staging device 102 (Figure 14) at each T-joint intersection 104 of individual longitudinal panels. This hanging basket is utilized for electroslag or electrogas welding equipment 106 and an operator, including equipment for cleaning steel about to be welded (Figure 14). Welding of all of the T-joints of one longitudinal subassembly unit 108 is done simultaneously to avoid distortion.

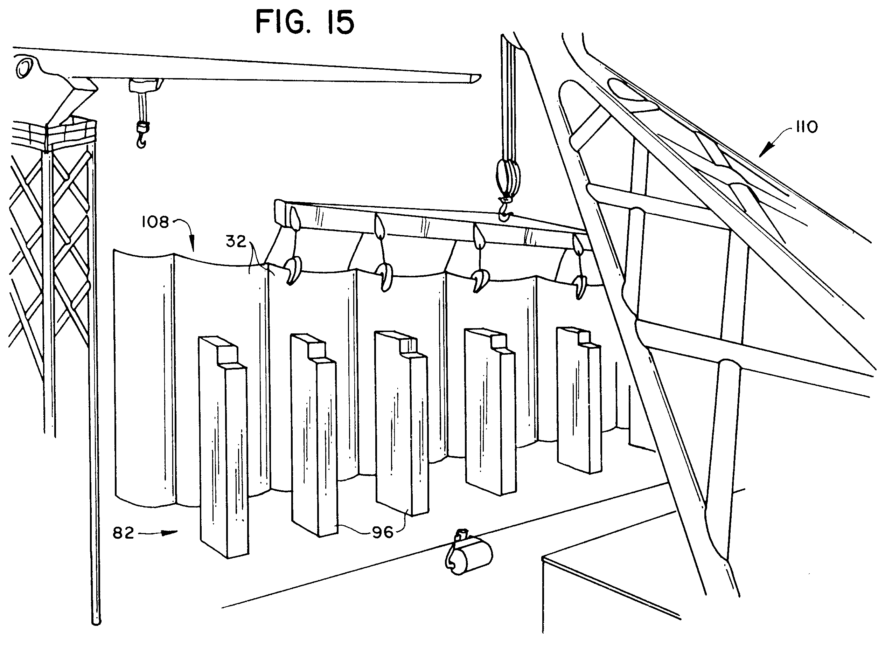

Upon completion of welding, the hydrauli jacks 88 are released, and the longitudinal subassembly unit 108 is lifted from the longitudinal subassembly fixture 82 (Figure 15) utilizing a floating derrick 110 of sufficient capacity (350 tons or greater) and moved to the longitudinal assembly touch-up, blast, and final paint room 112 (Figure 7).

(The time required to process a single longitudinal assembly through the longitudinal subassembly fixture is 24 hours. This includes 8 hours for lifting all individual longitudinal panels off the barge and setting them into final position, 8 hours for electroslag or electrogas welding of all T-joints and 8 hours for maintenance of the fixture, change-out of individual jacking elements (Figure 13), if required, and any other preparation of the fixture to receive the longitudinal panels for the next longitudinal subassembly.)

The longitudinal subassembly touch-up blast and final paint facility 112 (Figure 7) is a building approximately 100 feet long, 20 feet wide and 60 feet high. The roof 114 is removable in sections to permit longitudinal subassemblies 108 to be top-loaded into it. The floor (not shown) of the room 112 is a grating under which recovery and recycling apparatus for abrasive material used for abrasive blasting is located. The floor is reinforced as necessary to support the weight of a longitudinal subassembly 108. A canvas cover is placed over the grating when abrasive blasting is completed and painting commences.

In the room 112, stationary or fixed elevator towers (not shown) equipped with shot-blasting and spray-painting nozzles are located in positions in the building which center them in individual longitudinal cells of the longitudinal subassembly. These elevators are used for automatic shot-blasting and painting of inside surfaces of the longitudinal subassemblies. Further, elevators (not shown) are permanently located along the walls of the building to permit automatic shot blasting and painting of outside surfaces of longitudinal subassemblies. Shot-blasting nozzles inside and outside the cells are located only in way of welded T-joints. Paint spray nozzles inside and outside the cubicles provide full surface coverage. Dust collection equipment (not shown) is provided to remove dust caused by shot blasting. Heating, ventilation and dehumidification equipment (not shown) is provided to control the environment and assure that release of solvents and dust to the atmosphere externally of the building 112 is within clean air standards. All electrical installations are explosion-proof.

Reiterating in sequence the steps carried out in the room 112, the roof sections 114 are removed, a longitudinal subassembly 108 is lowered in a vertical position into the longitudinal assembly touch-up, blast, and final paint facility using the 350-ton floating crane device 110. Shot blast and spray paint nozzles are adjusted as required for the particular longitudinal subassembly. Roof sections 114 are put in place using a tower crane 116.

T-joint welded areas are shot-blasted automatically, as the elevator carriages with the blast nozzles travel the full height of the longitudinal subassembly.

Grating covers are installed on the floor in order to keep paint away from abrasive recovery mechanisms. Structure in way of future bulkhead welding and module joining welding is masked off. All surfaces are then painted with the appropriate paint systems, as the elevator carriages with the paint spray nozzles travel the full height of the longitudinal subassembly. Subsequent coats of paint are applied at appropriate intervals until final paint systems on all surfaces are complete.

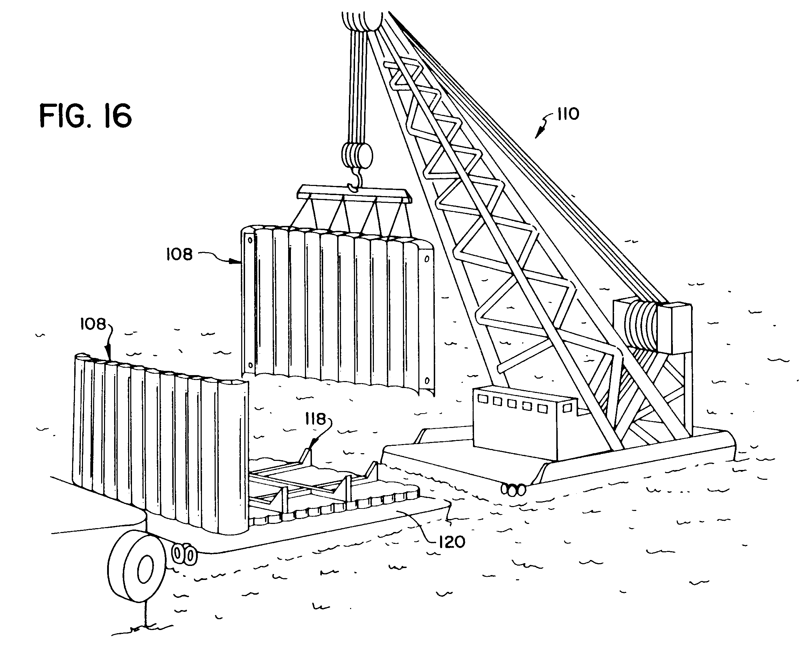

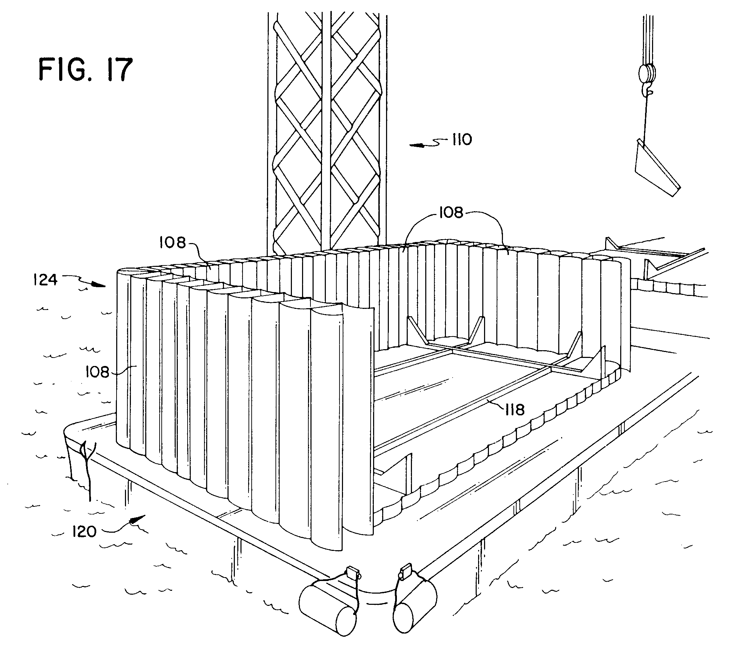

The roof 114 sections are removed by the tower crane 116, and the fully painted longitudinal subassembly 108 is lifted from the longitudinal assembly shot-blast and paint facility 112 using the 350-ton floating derrick 110 and placed in a respective position around a bulkhead subassembly 118, previously positioned on a module assembly pontoon fixture 120 (Figures 16 and 17).

The bulkhead assembly 118 interior to the inner hull may be placed on the module assembly pontoon 120 either by a floating derrick, or by rolling the finished bulkhead from its assembly position adjacent to the module assembly pontoon location.

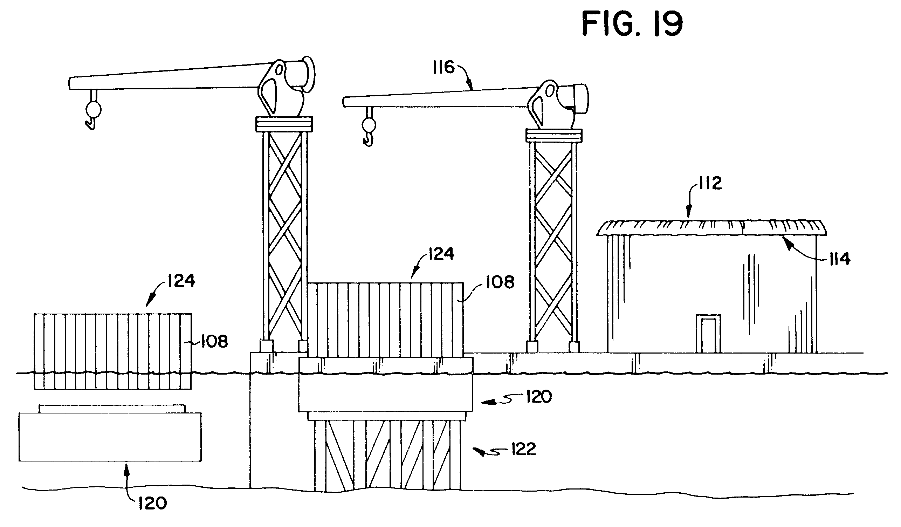

The module assembly pontoon 120 is approximately 200 feet long, 100 feet wide and 10 feet in depth. It is capable of changing its buoyancy by pumping water into, or out of its tanks (riot shown). While bulkhead longitudinal subassemblies 108 are being set in place, it rests on an underwater pile-supported grid 122 (Figure 19) to provide stability. In order to permit access by the 350-ton floating derrick 110 to all longitudinal subassembly module assembly locations on the pontoon 120, the module assembly pontoon 120 may be rotated after pumping water out of its tanks and increasing its buoyancy adequate to lift it off the grid 122, and then pumping water back into its tanks after rotation to the desired position so that it again rests on the grid as the next subassembly 108 is emplaced.

The purpose of having a piling supported grid under the pontoon is to enable the pontoon to have more time to respond to sudden load changes, i.e., the setting of a 300-ton longitudinal subassembly near the edge of the pontoon. However, the grid need not be designed to take the full weight of the pontoon and its contents, since the pontoon's own buoyancy can support most of the weight. The grid need only support that load weight which the pontoon cannot quickly respond to and, for convenience, the buoyancy lost by the pontoon when sitting on the grid at normal high high tide as the tide goes to low low. There is usually sufficient warning time to ballast down the pontoon so it does not float off on extraordinary high tides.

The piling under a pontoon grid, therefore, only has to support a portion of the load, invariably less than half. (In fact, floating pontoon dry docks do not use grids at all, relying totally on buoyancy. Graving dock floors and piling, which must support the full load are, therefore, much more expensive to construct than grids.)

The deck of the module assembly pontoon fixture has precisely located guides welded to it. As each subassembly is lowered in place, the bottom of the flat and curved panels of the subassembly are forced into the precise position dictated by the guides.

The top end of the subassembly is adjusted until optical alignment determines it is perfectly vertical. This adjustment is accomplished by existing techniques of using turn buckles and "come alongs" attached to the subassembly at one end and the bulkhead, pontoon or adjacent subassembly at the other end. When all subassemblies are set in this manner, all vertical joints are ready for welding.

After all the longitudinal subassemblies 108 for one module are in place around the bulkhead subassembly 118 on the module assembly pontoon 120, finally fit in place and temporarily secured, downhand welding of the longitudinal subassemblies to the perimeter of the bulkhead subassembly is carried out to produce a module 124.

Vertical elevator assemblies (not shown, but similar to the one shown in Figure 14) containing electroslag/electrogas welding machines (and, optionally, blasting and painting apparatus) are put in place at all external and cargo tank interior locations where there are vertical module assembly joints to weld. All vertical module assembly joints are welded concurrently to minimize distortion using the electroslag/electrogas process.

Bulkhead structure within the ballast 108, 118 tank area of the module 124 under construction is installed, fit and welded as the subassemblies are being put in place and welded. Piping assemblies (not shown) are also installed during this time. (Some final installation and pipe hanger welding may be done on piping located on the tank top or in ballast tanks after erection of the module and orientation into its final position.)

Areas disturbed by welding done during the module assembly stage are preferably blasted by the least disruptive, most efficient, and environmentally acceptable approach. This can be by Vacublast blasting or dry ice blasting. These blasted areas are then final painted either by spray gun, brush or roller depending upon impact on other ongoing work and impact on air quality.

A temporary bulkhead with a gasket (not shown) is installed across the inner bottom tanks (cells) at the top of the module 124 in its vertical, module assembly position. Temporary bulkheads (not shown) are also installed in each side tank cubicle (cell) attached to a kick bracket (plate) at least 2.5 feet from the top.

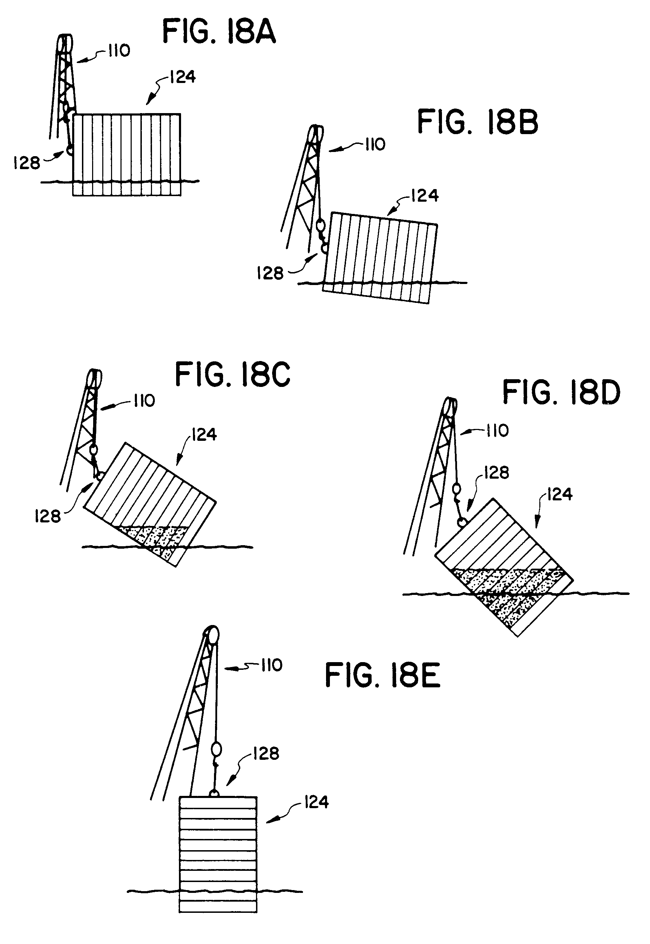

After completion of the above and any other work most efficiently performed in the vertical, module assembly position, the module assembly pontoon is floated off its supporting grid and sunk leaving the module afloat on its bulkhead, as indicated in Figure 18A and the left side of Figure 19.

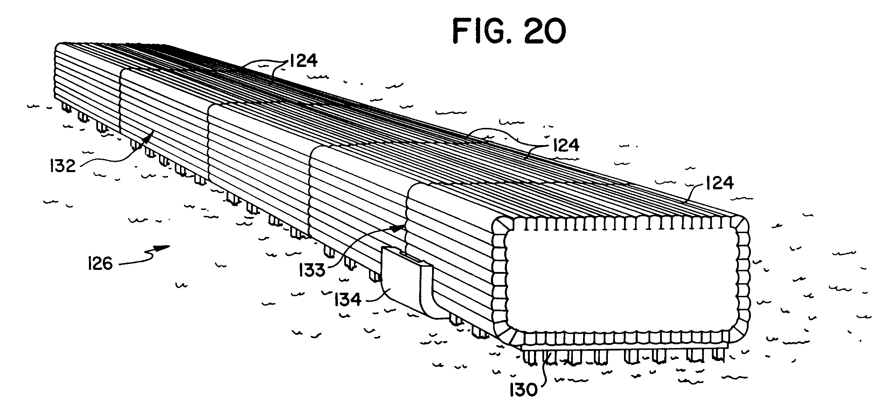

The module 124 floating on its bulkhead is moved by tug to a location convenient to the module joining facility 126 (Figure 20). The 350-ton floating derrick 110 is attached to lifting pads 128 on the deck structure (Figure 18A) located to provide a horizontal keel for the module 124 after erection (i.e., after tilting over to a horizontal orientation), considering weight and buoyancy distribution (Figure 18E). The derrick 110 is used to keep a lifting strain on the module throughout erection.

For erecting the module 124 that is floating on its bulkhead, its inner bottom is flooded with salt water. This heels the module approximately 16 degrees in the direction of the inner bottom (Figure 18B). Water is then progressively pumped into the crotch of the triangle bounded by the bulkhead and the innerbottom tank top (Figures 18C and 18D). This water and its free surface causes the module to increasingly heel in the same direction until the water reaches the limit of the tank top at the module's open end (Figure 18D). From this point on, the lifting capacity of the derrick 110 permits it to complete the erection of the module to a horizontal keel orientation as water is pumped out of the inner bottom to permit the module to be buoyant, once erect (Figure 18E).

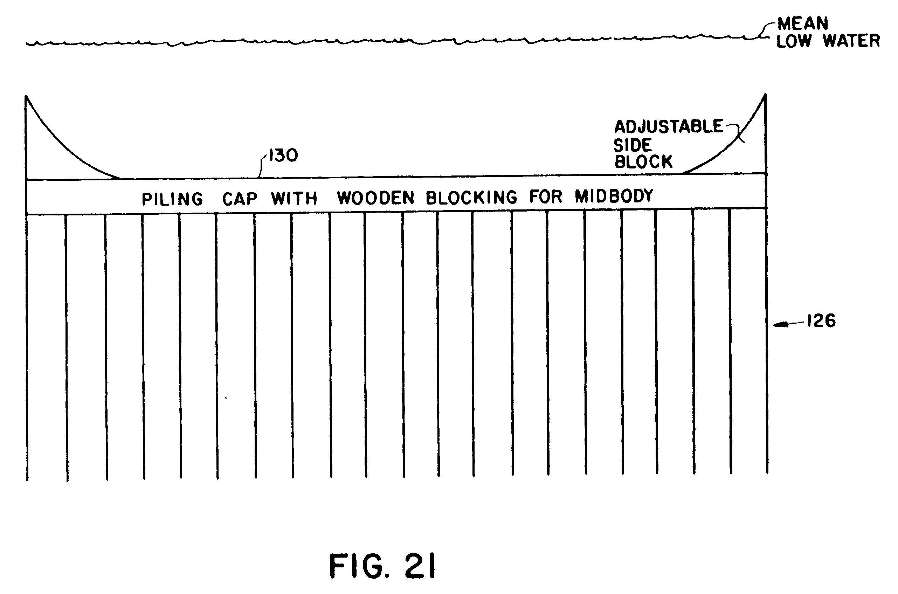

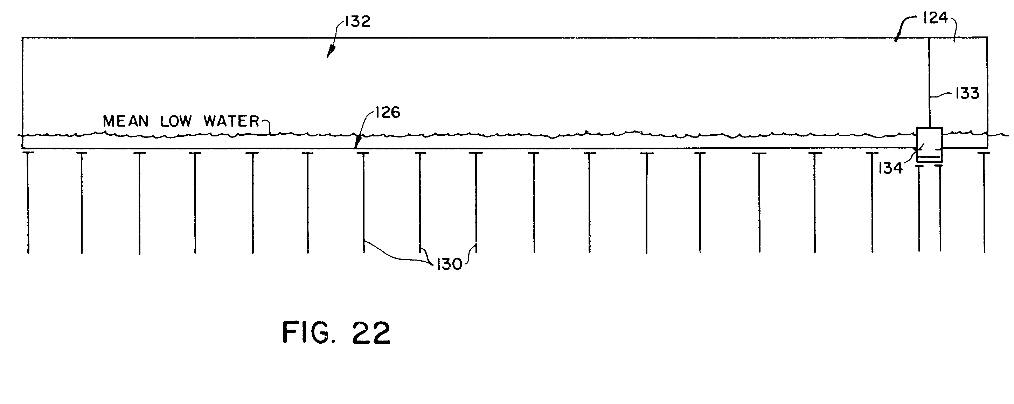

As modules are sequentially assembled and erected afloat, they are moved to the module joining facility 126 (Figures 20, 21, 22 and 23) for joining. The module joining facility comprises a module joining grid 130 upon which the entire midbody 132 (at its various stages of completion) is set, with the exception of approximately 20 feet in way of the underwater intermodule joint 133 in the process of being made-up. This latter region rests in a module joining pontoon caisson 134.

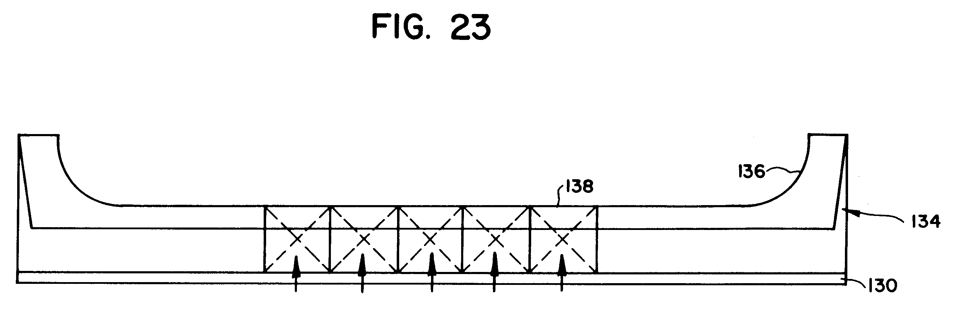

The module 124 to growing midbody 132 joining process starts as soon as the first two modules are afloat and erect. They are each towed to the module joining facility and positioned in it, with the butt to be joined between them floating over the module joining pontoon caisson 134, and their other ends on the grid 130 adjoining the pontoon caisson 134. The pontoon caisson has removable chambers (Figure 23) to permit its width to be varied for different sized ships.

These first two modules are centered over the central grid with the ends between them butting at the longitudinal center of the caisson 130. Water is pumped into the side ballast tanks of both modules 124, which forces submergence of the modules so both are hard aground at high tide on the grid 130, the caisson blocks 136 and the sill gaskets 138. The joint between the caisson sill and the ship's hull is sealed, and the caisson is pumped dry.

Tank tops, bottom shell deck and under deck structural areas of the butt are prepared for welding and welded. Exterior and interior areas in way of the butt where paint is damaged by welding are blasted by the least disruptive and most efficient process (for example Vacublast blasting or dry ice blasting) and painted by the least disruptive process (spray, brush or roller) as welding proceeds. Vertical butt welds joining wing ballast tanks are prepared for welding, welded to the maximum extent using electroslag/electrogas welding procedures, blasted and painted as above. Butts between interior flat panel longitudinals are welded and painted as convenient.

The joined modules are relocated further along the module joining facility 126 as soon as underwater welding and painting is complete (approximately 7 days) by pumping out wing tank ballast, moving the growing midbody 48 feet inboard, reballasting the wing tanks and centering the growing midbody hard aground on the grid 130. Then, the next module 124 is erected in the caisson and the above process is repeated. In this manner, all modules 124 comprising the cargo tanks for a single ship are joined into a single midbody section 132 to be conventionally joined to existing or new bows and sterns in a shipyard graving dock.

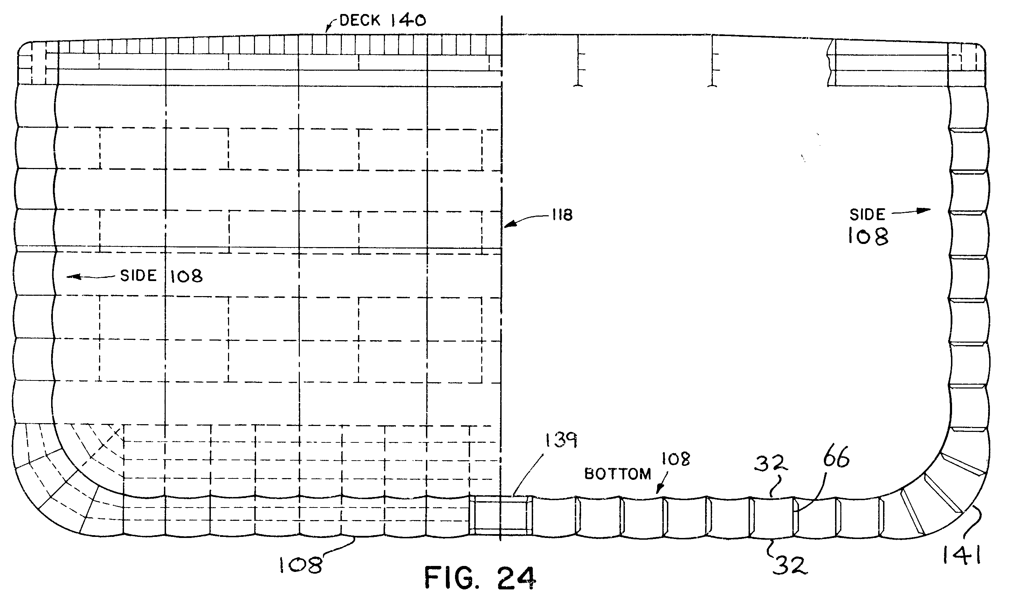

In its currently most preferred form, a tanker midbody produced in accordance with the invention preferably has the shapes and features depicted in Figures 24-27.

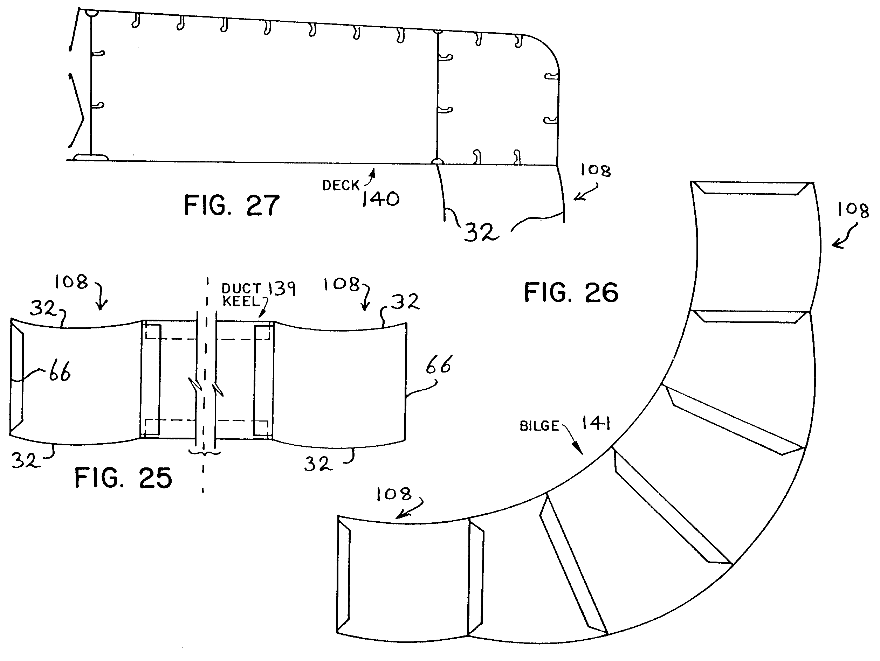

Figure 24 is a transverse cross-sectional view of a double-hulled vessel, through the midbody 132 thereof, a bulkhead 118 being illustrated in the left half of the view. Figure 25 is an enlarged scale fragmentary transverse cross-sectional view showing the region where two longitudinal hull subassemblies 108 join a duct keel 139. Figure 26 is an enlarged scale fragmentary transverse cross-sectional view of the vessel hull of Figure 24, showing the region where two longitudinal hull subassemblies 108 join one another at the bottom-to-side transition 141. Figure 27 is an enlarged scale fragmentary transverse cross-sectional view of the vessel hull of Figure 24, showing the region where a longitudinal hull subassembly 108 joins the underside of the outer margin of the deck structure 140 (which may be conventional, as may be the bow and stern sections of the vessel).

## Claims

1. A vessel hull structure comprising:
a first set of elongate plates (32) welded to one another in series at joints (104) along respective adjoining longitudinal edges (92) of the plates to provide an outer hull structure having a bottom and two laterally opposite sides;
a second set of elongate plates (32) welded to one another in series at joints (104) along respective adjoining longitudinal edges (92) of the plates to provide an inner hull structure;
a set of longitudinal rib plates (66) welded between said inner and outer hull structures along respective inner and outer longitudinal edges (92) of the rib plates (66) at positions adjacent respective said joints (104) of said inner and outer hull structures; and
a transverse bulkhead (118);
characterised in that
the vessel hull structure is a double-hulled structure in which the said inner hull structure has a bottom and two laterally opposite sides and is arranged within the said outer hull structure with the respective bottoms and sides of the hull structures spaced apart,
each said longitudinal edge (92) of a plate (32,66) being an edge which terminates the plate at a depth substantially equal to the thickness of the respective plate, and each longitudinal rib plate (66) being positioned in register with a respective joint (104) between adjacent plates (32) of the outer hull and in register with a respective joint (104) between adjacent plates (32) of the inner hull, at each said joint (104) the three joined longitudinal edges (92) being welded together by a single weld extending between each edge (92) and the two remaining joined edges (92).

2. A vessel hull structure according to claim 1 in which each plate (32) of the said first and second sets of plates is an outwardly convex, cylindrically arcuate plate (32).

3. A vessel hull structure according to claim 1 or 2 in which each longitudinal edge (92) is a cut edge of the respective plate (32,66).

4. A vessel hull structure according to claim 1, 2 or 3 in which the outer hull has an interruption, located medially of said bottom of said outer hull; and the inner hull has an interruption, located medially of said bottom of said inner hull; and there is provided a medially arranged, longitudinally extending duct keel (139) disposed in both said interruptions and weldedly joined to longitudinal edges of respective adjoining plates of said first and second sets of plates (32).

5. A vessel hull structure according to any preceding claim in which the said inner hull and outer hull have two longitudinally opposite ends and said bulkhead (118) is provided at one of said ends of said inner hull.

6. A parallel midbody structure for a vessel hull comprising a plurality of like modules (124) serially weldedly connected end-to-end to provide a parallel midbody structure (132) each said module comprising a hull structure as set out in any preceding claim.

7. A vessel hull comprising a midbody structure as set out in claim 6, a vessel hull bow section weldedly connected to one end of said midbody structure (132), and a vessel hull stern section weldedly connected to the opposite end of said midbody structure (132).

8. A vessel hull structure according to, or when provided in the struture of, any preceding claim in which each rib plate (66) is provided on one face thereof with a plurality of laterally projecting kick plate stiffeners (48) spaced from one another longitudinally of said inner and outer hulls and each extending from adjacent said inner hull to adjacent said outer hull.

9. A vessel hull structure according to claim 8, in which each rib plate (66) is provided with at least one lightening hole (58) opening therethrough laterally of said inner and outer hulls longitudinally between a respective adjacent two of said kick plate stiffeners (48).

10. A vessel hull structure according to claim 4, or any claim when including the features of claim 4, in which said inner and outer hulls and rib plates are constituted of four substantially identical subassemblies (108), comprising: starboard and port bottom subassemblies (108) which are mirror images of one another, respectively joined edgewise with said duct keel (139) and with starboard and port sidewall subassemblies (108) which are mirror images of one another.

11. A vessel hull structure according to claim 10 in which said sides of said inner and outer hulls have upper edges and a deck structure (140) bridging between and connecting said starboard and port sidewall assemblies (108) at said upper edges of said inner and outer hulls.

12. A vessel hull structure according to claim 10 or 11 when including the features of claim 2, in which at respective transitions (141) between the bottom and sides of each of said inner and outer hulls, said inner and outer hulls have bilge radii which approximate in size to the radii of curvature of others of said cylindrically arcuate steel plates in respective of said hulls, including ones both adjacent to and remote from said transitions (141).

13. A vessal hull structure according to claim 2, or any claim including the features of claim 2, in which each first plate (32) is substantially rectangular in plan so as to have two long edges and two short edges, and is curved by being arcuate about an axis that is substantially parallel to said long edges, each second plate (32) is substantially rectangular in plan so as to have two long edges and two short edges, and curved by being arcuate about an axis that is substantially parallel to said long edges.

14. A parallel midbody structure according to claim 6, characterised by the substantial absence of transverse reinforcement between said inner and outer hulls but for said bulkheads, which have an outer perimeter welded to a plurality of the plates (32) of the said second set of plates.

15. A vessel hull construction method, comprising:
(a) providing a first set of elongate plates (32) serially arranged edge-to-edge along longitudinal edges (92) thereof;
(b) providing a second set of elongate plates (32) serially arranged edge-to-edge along longitudinal edges (92) thereof;
(c) providing a further set of elongate plates (66) between the first and second sets, each plate (66) of the further set having one longitudinal edge (92) disposed adjacent the longitudinal edges (92) of two adjoining ones of said plates (32) in said first set and an opposite longitudinal edge (92) disposed adjacent the longitudinal edges of two adjoining ones of said plates (32) in said second set; and
(d) providing welds between respective plates (32,66) to form a double-walled vessel hull structure;
characterised in that the plates are welded together by the steps of: holding each said plate (32, 66) in a vertical orientation by engagement with both opposite faces thereof for maintaining the plates in a desired shape and position defining a vertically extending T-joint site for each junction of said plates; welding a respective T-joint (104) at each said T-joint site by vertically travelling welding means, while holding said plates; and releasing said plates from being held.

16. A method according to claim 15 in which:
in step (a) the first set of plates (32) are cylindrically curved rectangular plates (32) serially arranged edge-to-edge, all convex in one direction with all axes of curvature vertically oriented; and
in step (b) the second set of plates (32) are cylindrically curved rectangular plates (32) serially arranged edge-to-edge, all convex in said one direction with all axes of curvature vertically oriented.

17. A method according to claim 15 or 16 in which each said longitudinal edge (92) of a plate (32,66) is an edge which terminates the plate at a depth substantially equal to the thickness of the respective plate, and each plate (66) of the further set is positioned in register with a respective joint (104) between adjacent plates (32) of the first set and in register with a respective joint (104) between adjacent plates (32) of the second set, at each said joint (104) the three joined longitudinal edges (92) being welded together by a single weld extending between each edge (92) and the two remaining joined edges (92).

18. A method according to claim 15, 16 or 17 further comprising:
(e) repeating steps (a)-(d) a plurality of times to provide a plurality of like subassemblies (108);
(f) arranging said plurality of said subassemblies (108) in a series around a bulkhead (118); and
(g) welding corresponding edges of corresponding plates on adjoining ones of said subassemblies (108) to one another and welding said subassemblies (108) to said bulkhead (118) to thereby provide a double-hull module (124) having a floor portion and two laterally opposite side portions.

19. A method according to claim 18, wherein steps (f) and (g) are conducted while said plates (32,66), and therefore said module (124), remain vertically oriented.

20. A method according to claim 19, wherein
steps (a) - (e) are conducted in a land-based fixture, and steps (f) and (g) are conducted on board a variable buoyancy barge (120), with the aid of a floating derrick (110) which successively lifts individual ones of said subassemblies (108) from a fixture (82) and later places them on said barge (120) in said series around said bulkhead (118); and
wherein said barge (120) is sunk onto a fixed support (122) each time a subassembly (108) is to be placed thereon, and between at least sometimes that two subassemblies (108) are successively placed thereon, said barge (120) is increased in buoyancy so as to float above said fixed support (122) and is floatingly shifted in order to bring a site where a next subassembly (108) will be placed, into more convenient disposition relative to said land-based fixture (88).

21. A method according to any of claims 15 to 20, wherein said welding of said T-joints (104) is accomplished by electroslag welding, with cooling being provided along both faces of each plate (32) in said second set as the respective T-joint is being welded.

22. A method according to any of claims 15 to 20, wherein said welding of said T-joints (104) is accomplished by electrogas welding, with cooling being provided along both faces of each plate in said second set as the respective T-joint is being welded.

23. A method according to claims 15 to 22, wherein in step (c), all of said T-joints (104) are simultaneously welded at all of said T-joint sites.

24. A method according to any of claims 15 to 23, wherein said holding of step (c) and said releasing of step (d) are respectively accomplished by setting and releasing hydraulically operated horizontally acting jacks (88) mounted to respective towers (94,96).

25. A method according to claim 19, 20 or any of claims 21 to 24, when including the features of claim 19, further comprising:
(h) repeating steps (a) - (g) a plurality of times to thereby provide a succession of like modules (124):
(i) tilting-over each module (124) to a horizontal disposition, bottom downwards; and
(j) serially welding said modules (124) together end-to-end, thereby providing a double-hulled vessel parallel midbody structure having two opposite ends.

26. A method according to any of claims 15 to 25 in which in steps (a), (b) and (c), the plates (32,66) are provided by cutting the plates to a required size from sheet material, and each longitudinal edge (92) is a cut edge of the plate.

27. A double-walled sub-assembly for a vessel hull construction, comprising:
a first set of elongate plates (32) welded to one another in series at joints (104) along respective adjoining longitudinal edges (92) of the plates;
a second set of elongate plates (32) welded to one another in series at joints (104) along respective adjoining longitudinal edges (92) of the plates, the first and second sets of plates (32) being spaced apart from each other;
a further set of elongate plates (66) welded between the first and second sets of plates (32) along respective longitudinal edges (92) of the further plates (66) at positions adjacent respective said joints (104) of said inner and outer hull structures;
characterised in that each said longitudinal edge (92) of a plate (32,66) is an edge which terminates the plate at a depth substantially equal to the thickness of the respective plate, and each plate (66) of the further set is positioned in register with a respective joint (104) between adjacent plates (32) of the first set and in register with a respective joint (104) between adjacent plates (32) of the second set, at each said joint (104) the three joined longitudinal edges (92) being welded together by a single weld extending between each edge (92) and the two remaining joined edges (92).

28. A method of producing a sub-component for joining to other sub-components in a vessel hull construction method, comprising:
providing a pair of elongate plates (32) arranged edge to edge along longitudinal edges thereof,
providing a further elongate plate (66) having a longitudinal edge (92) disposed adjacent the longitudinal edges (92) of the said two adjoining plates (32), and
welding the three plates (32,66) together,
characterised in that the plates are welded together by the steps of: holding each plate (32, 66) in a vertical orientation by engagement with both opposite faces thereof for maintaining the plates in a desired shape and position defining a vertically extending T-joint site for the junction of said plates; welding a T-joint (104) at the said vertically extending T-joint site by vertically travelling welding means, while holding said plates; and releasing said plates from being held.

29. A method according to claim 28 in which each said longitudinal edge (92) of a plate (32,66) is an edge which terminates the plate at a depth substantially equal to the thickness of the respective plate, and the further plate (66) is positioned in register with the junction between the said pair of adjacent plates (32), the three joined longitudinal edges (92) being welded together by a single weld extending between each edge (92) and the two remaining joined edges (92).

30. A method of producing a sub-component for joining to other sub-components in a vessel hull construction method comprising:
providing a first pair of elongate plates (32) arranged edge-to-edge along longitudinal edges thereof;
providing a second pair of elongate plates (32) arranged edge-to-edge along longitudinal edges thereof;
providing a further elongate plate (66) having one longitudinal edge (92) disposed adjacent the longitudinal edges (92) of the first pair of plates (32) and an opposite longitudinal edge (92) disposed adjacent the longitudinal edges (92) of the second pair of plates (32) and
providing welds between respective plates (32,66),
characterised in that the plates are welded together by the steps of: holding each plate (32,66) in a vertical orientation by engagement with both opposite faces thereof for maintaining the plates in a desired shape and position defining a first vertically extending T-joint site (104) at one longitudinal edge (92) of the further rectangular plate (66), and defining a second vertically extending T-joint site (104) at the said opposite longitudinal edge (92) of the said further rectangular plate (66); welding a respective T-joint (104) at each said vertically extending T-joint site by vertically travelling welding means, while holding said plates; and releasing said plates from being held.

31. A method according to claim 30 in which each said longitudinal edge (92) of a plate (32,66) is an edge which terminates the plate at a depth substantially equal to the thickness of the respective plate, and the further plate (66) is positioned in register with a respective junction between adjacent plates (32) of the first set and in register with a respective junction between adjacent plates (32) of the second set, at each said joint (104) the three joined longitudinal edges (92) being welded together by a single weld extending between each edge (92) and the two remaining joined edges (92).

32. A method according to any of claims 28 to 31, wherein said welding of said T-joints (104) is accomplished by electroslag welding, with cooling being provided along both faces of each plate (32) in said second set as the respective T-joint is being welded.

33. A method according to any of claims 28 to 31, wherein said welding of said T-joints (104) is accomplished by electrogas welding, with cooling being provided along both faces of each plate in said second set as the respective T-joint is being welded.

34. A method according to any of claims 28 to 33 in which in steps (a), (b) and (c), the plates (32,66) are provided by cutting the plates to a required size from sheet material, and each longitudinal edge (92) is a cut edge of the plate.

## Patentansprüche

1. Schiffsrumpfstruktur mit:
einem ersten Satz von länglichen Platten (32), die in einer Reihe mit einer Verbindung (104) entlang jeweils benachbarter Längsseitenflächen (92) der Platten miteinander verschweißt sind, um eine äußere Schiffsrumpfstruktur mit einem Boden und zwei seitlich gegenüberliegenden Seiten zu bilden;
einem zweiten Satz von länglichen Platten (32), die in einer Reihe mit einer Verbindung (104) entlang jeweils benachbarter Längsseitenflächen (92) der Platten miteinander verschweißt sind, um eine innere Rumpfstruktur zu bilden;
einem Satz von Längsrippenplatten (66), die zwischen die innere und äußere Rumpfstruktur mit jeweiliger innerer und äußerer Längsseitenfläche (92) der Rippenplatten (66) in Positionen angrenzend an jeweilige Verbindungen (104) der inneren und der äußeren Rumpfstruktur geschweißt sind; und
einer Schottwand (118);
dadurch gekennzeichnet, daß
die Schiffsrumpfstruktur eine Doppelrumpfstruktur ist, in der die innere Rumpfstruktur einen Boden und zwei seitlich gegenüberliegende Seiten hat und innerhalb der äußeren Rumpfstruktur mit Abstand zwischen den jeweiligen Böden und Seiten der Rumpfstrukturen angeordnet ist,
wobei jede Längsseitenfläche (92) einer Platte (32, 66) eine Seitenfläche ist, die die Platte mit einer Tiefe abschließt, welche im wesentlichen gleich der Dicke der jeweiligen Platte ist, und wobei jede Längsrippenplatte (66) ausgerichtet mit einer jeweiligen Verbindung (104) zwischen benachbarten Platten (32) des äußeren Rumpfes und ausgerichtet mit einer jeweiligen Verbindung (104) zwischen benachbarten Platten (32) des inneren Rumpfes angeordnet ist, wobei an jeder Verbindung (104) die drei verbundenen Längsseitenflächen (92) mit einer einzelnen Schweißnaht, welche zwischen jeder Seitenfläche (92) und den beiden übrigen verbundenen Seitenflächen (92) ausgedehnt ist, miteinander verschweißt sind.

2. Schiffsrumpfstruktur nach Anspruch 1, bei der jede Platte (32) des ersten und zweiten Satzes von Platten eine nach außen konvexe, zylindrisch gebogene Platte (32) ist.

3. Schiffsrumpfstruktur nach Anspruch 1 oder 2, bei der jede Längsseitenfläche (92) eine Schnittkante der jeweiligen Platte (32, 66) ist.

4. Schiffsrumpfstruktur nach Anspruch 1, 2 oder 3, bei der der äußere Rumpf eine Unterbrechung hat, welche in der Mitte des Bodens des äußeren Rumpfes liegt, und der innere Rumpf eine Unterbrechung hat, welche in der Mitte des Bodens des inneren Rumpfes liegt, und wobei ein in der Mitte angeordneter, in Längsrichtung verlaufender Kielkanal (139) vorgesehen ist, der in den Unterbrechungen angeordnet und mit den Längsseitenflächen von jeweils benachbarten Platten des ersten und zweiten Satzes von Platten (32) verschweißt ist.

5. Schiffsrumpfstruktur nach einem der vorhergehenden Ansprüche, bei der der innere und äußere Rumpf zwei in Längsrichtung gegenüberliegende Enden haben und die Schottwand (118) an einem der Enden des inneren Rumpfes vorgesehen ist.

6. Parallele Mittelkörperstruktur für einen Schiffsrumpf, die eine Mehrzahl gleicher Module (124) aufweist, welche in Reihe Ende an Ende miteinander verschweißt sind, um eine parallele Mittelkörperstruktur (132) zu bilden, wobei jedes Modul eine Rumpfstruktur nach einem der vorhergehenden Ansprüche aufweist.

7. Schiffsrumpf mit einer Mittelkörperstruktur nach Anspruch 6, wobei ein Schiffsrumpfbugabschnitt mit einem Ende der Mittelkörperstruktur (132) verschweißt ist und ein Schiffsrumpfheckabschnitt mit dem gegenüberliegenden Ende der Mittelkörperstruktur (132) verschweißt ist.

8. Schiffsrumpfstruktur gemäß oder wenn vorgesehen in der Struktur gemäß einem der vorhergehenden Ansprüche, bei der jede Rippenplatte (66) auf einer Seite mit einer Mehrzahl von seitlich vorstehenden Versteifungsplatten versehen sind, die voneinander in Längsrichtung des inneren und äußeren Rumpfes beabstandet sind und die sich von nahe des inneren Rumpfes bis nahe des äußeren Rumpfes erstrecken.

9. Schiffsrumpfstruktur nach Anspruch 8, bei dem jede Rippenplatte (66) mit wenigstens einem Erleichterungsloch (58) versehen ist, das sich seitlich des inneren und des äußeren Rumpfes, in Längsrichtung jeweils zwischen zwei benachbarten Versteifungsplatten (48) öffnet.

10. Schiffsrumpfstruktur nach Anspruch 4 oder nach einem der vorhergehenden Ansprüche, wenn er die Merkmale des Anspruchs 4 enthält, bei der der innere und der äußere Rumpf und die Rippenplatten durch vier im wesentlichen identische Untereinheiten (108) gebildet sind, die aufweisen: Steuerbord- und Backbord-Untereinheiten (108), die spiegelbildlich zueinander sind und an ihren jeweiligen Seitenflächen mit dem Kielkanal (139) und mit Steuerbord- und Backbord-Seitenwand-Untereinheiten (108) verbunden sind, die spiegelbildlich zueinander sind.

11. Schiffsrumpfstruktur nach Anspruch 10, bei der die Seiten des inneren und des äußeren Rumpfes obere Ränder und eine Deckstruktur (140) haben, die sich erstrecken zwischen und verbunden sind mit den Steuerbord- und Backbord-Seitenwand-Untereinheiten (108) an den oberen Rändern des inneren und des äußeren Rumpfes.

12. Schiffsrumpfstruktur nach Anspruch 10 oder 11, wenn die Merkmale des Anspruchs 2 enthalten sind, bei der der innere und der äußere Rumpf in jeweiligen Übergängen (141) zwischen dem Boden und den Seiten Bilgenradien haben, die in ihrer Größe den Krümmungsradien der anderen der zylindrisch gebogenen Stahlplatten in den jeweiligen Rümpfen angenähert sind, einschließlich sowohl derjenigen Platten, die den Übergängen (141) benachbart sind, als auch der davon entfernten.

13. Schiffsrumpfstruktur nach Anspruch 2 oder einem der vorhergehenden Ansprüche, der die Merkmale von Anspruch 2 enthält, bei der jede erste Platte (32) in Aufsicht im wesentlichen rechteckig ist, so daß sie zwei lange Seitenflächen und zwei kurze Seitenflächen hat, und gekrümmt ist, indem sie um eine Achse gebogen ist, die im wesentlichen parallel zu den langen Seitenflächen ist, jede zweite Platte (32) in Aufsicht im wesentlichen rechtwinklig ist, so daß sie zwei lange Seitenflächen und zwei kurze Seitenflächen hat, und gekrümmt ist, indem sie um eine Achse gebogen ist, die im wesentlichen parallel zu den langen Seitenflächen ist.

14. Parallele Mittelkörperstruktur nach Anspruch 6, dadurch gekennzeichnet, daß außer der Schottwand querverlaufende Verstärkungen zwischen den inneren und äußeren Rümpfen im wesentlichen fehlen, welche Schottwand an ihrem äußeren Umfang mit einer Mehrzahl der Platten (32) des zweiten Satzes von Platten verschweißt ist.

15. Herstellungsverfahren für einen Schiffsrumpf, bei dem
(a) ein erster Satz von länglichen Platten (32) reihenförmig angeordnet Seitenfläche an Seitenfläche mit ihren Längsseitenflächen (92) bereitgestellt wird;
(b) ein zweiter Satz von länglichen Platten (32) reihenförmig angeordnet Seitenfläche an Seitenfläche mit ihren Längsseitenflächen (92) bereitgestellt wird;
(c) ein weiterer Satz von länglichen Platten (66) zwischen dem ersten und dem zweiten Satz bereitgestellt wird, wobei jede Platte (66) des weiteren Satzes eine Längsseitenfläche (92), die benachbart den Längsseitenflächen (92) von zwei aneinandergrenzenden Platten (32) des ersten Satzes angeordnet ist, und eine gegenüberliegende Längsseitenfläche (92) hat, die benachbart den Längsseitenflächen von zwei aneinandergrenzenden Platten (32) des zweiten Satzes angeordnet ist; und
(d) Schweißnähte zwischen jeweiligen Platten (32, 66) gebildet werden, um eine doppelwandige Schiffsrumpfstruktur zu bilden;
dadurch gekennzeichnet, daß die Platten zusammengeschweißt werden, indem jede Platte (32, 66) in vertikaler Ausrichtung durch Angriff an beiden gegenüberliegenden Flächen gehalten wird, um die Platten in einer gewünschten Form und Position zu halten, in der für jede Verbindung der Platten ein vertikal verlaufender T-Verbindungsbereich gebildet wird; indem eine jeweilige T-Verbindung (104) an jedem T-Verbindungsbereich durch sich vertikal bewegende Schweißmittel verschweißt wird, während die Platten gehalten werden; und indem die Platten aus ihrer Halterung freigegeben werden.

16. Verfahren nach Anspruch 15, bei dem:
in Schritt (a) die Platten (32) des ersten Satzes zylindrisch gekrümmte rechteckige Platten (32) sind, die in Reihe Seitenfläche an Seitenfläche angeordnet sind, wobei alle in einer Richtung konvex mit allen Krümmungsachsen vertikal ausgerichtet sind; und
in Schritt (b) die Platten (32) des zweiten Satzes zylindrisch gekrümmte rechteckige Platten (32) sind, die in Reihe Seitenfläche an Seitenfläche angeordnet sind, wobei alle in einer Richtung konvex mit allen Krümmungsachsen vertikal ausgerichtet sind.

17. Verfahren nach Anspruch 15 oder 16, bei dem jede Längsseitenfläche (92) einer Platte (32, 66) eine Seitenfläche ist, die die Platte mit einer Tiefe abschließt, die im wesentlichen gleich der Dicke der jeweiligen Platte ist, und bei der jede Platte (66) des weiteren Satzes ausgerichtet mit einer jeweiligen Verbindung (104) zwischen benachbarten Platten (32) des ersten Satzes und ausgerichtet mit einer jeweiligen Verbindung (104) benachbarter Platten (32) des zweiten Satzes angeordnet ist, wobei an jeder Verbindung (104) die drei Verbindungslängskanten (92) durch eine einzelne Schweißnaht miteinander verschweißt werden, die zwischen jeder Seitenfläche (92) und den beiden anderen Verbindungskanten (92) ausgedehnt ist.

18. Verfahren nach Anspruch 15, 16 oder 17, bei dem:
(e) die Schritte (a) bis (d) mehrmals wiederholt werden, um eine Mehrzahl gleicher Untereinheiten (108) bereitzustellen;
(f) die Mehrzahl von Untereinheiten (108) in einer Reihe um eine Schottwand (118) angeordnet werden; und
(g) die entsprechenden Seitenflächen der entsprechenden Platten von aneinandergrenzenden Untereinheiten (108) miteinander verschweißt werden und die Untereinheiten (108) mit der Schottand (118) verschweißt werden, um dadurch ein Doppelrumpfmodul (124) mit einem Bodenbereich und zwei seitlich gegenüberliegenden Seitenbereichen bereitzustellen.

19. Verfahren nach Anspruch 18, wobei die Schritte (f) und (g) durchgeführt werden, während die Platten (32, 66), und daher das Modul (124), vertikal ausgerichtet sind.

20. Verfahren nach Anspruch 19, wobei
die Schritte (a) bis (e) in einer landgestützten Standvorrichtung durchgeführt werden und die Schritte (f) und (g) an Bord einer Schute (120) mit variablem Auftrieb durchgeführt werden, mit Hilfe eines Schwimmkrans (110), der aufeinanderfolgend einzelne der Untereinheiten (108) aus einer Standvorrichtung (82) anhebt und sie darauf auf der Schute (120) in der besagten Reihe um die Schottwand (118) plaziert; und
wobei die Schute (120), jedesmal wenn eine Untereinheit (108) darauf zu plazieren ist, auf einen festen Träger (122) abgesenkt wird, und wobei der Auftrieb der Schute (120) jedenfalls manchmal zwischen zwei aufeinanderfolgenden Beladungen mit zwei Untereinheiten (108) erhöht wird, so daß sie über dem festen Träger (122) schwimmt und schwimmend verschoben wird, um den Ort, wo die nächste Untereinheit (108) aufgeladen wird, in eine günstigere Stellung in bezug auf die landgestützte Standvorrichtung (88) zu bringen.

21. Verfahren nach einem der Ansprüche 15 bis 20, wobei das Schweißen der T-Verbindungen (104) durch Elektroschlacke-Schweißen durchgeführt wird, wobei eine Kühlung entlang beider Oberflächen jeder Platte (32) in dem zweiten Satz bereitgestellt wird, während die jeweilige T-Verbindung geschweißt wird.

22. Verfahren nach einem der Ansprüche 15 bis 20, wobei das Schweißen der T-Verbindungen (104) durch Elektrogasschweißen durchgeführt wird, wobei eine Kühlung entlang beider Flächen jeder Platte in dem zweiten Satz bereitgestellt wird, während die jeweilige T-Verbindung geschweißt wird.

23. Verfahren nach den Ansprüchen 15 bis 22, wobei in Schritt (c) alle T-Verbindungen (104) an allen T-Verbindungsbereichen gleichzeitig geschweißt werden.

24. Verfahren nach einem der Ansprüche 15 bis 23, wobei das Halten in Schritt (c) und das Freigeben in Schritt (d) jeweils erreicht werden, indem hydraulisch betriebene, horizontal wirkende Hubvorrichtungen (88) angesetzt und wieder gelöst werden, die an jeweiligen Türmen (94, 96) angebracht sind.

25. Verfahren nach Anspruch 19, 20 oder einem der Ansprüche 21 bis 24, wenn die Merkmale des Anspruchs 19 enthalten sind, welches Verfahren weiter aufweist:
(h) mehrmaliges Wiederholen der Schritte (a) bis (g), um dadurch eine Folge von gleichen Modulen (124) bereitzustellen;
(i) Kippen jedes Moduls (124) in eine horizontale Ausrichtung mit dem Boden nach unten; und
(j) aufeinanderfolgendes Verschweißen der Module (124) Ende an Ende miteinander, wodurch eine Doppelrumpf-Schiffsmittelkörperstruktur mit zwei gegenüberliegenden Enden geschaffen wird.

26. Verfahren nach einem der Ansprüche 15 bis 25, bei dem in den Schritten (a), (b) und (c) die Platten (32, 66) bereitgestellt werden, indem die Platten aus Blechmaterial auf eine erforderliche Größe geschnitten werden und jede Längsseitenfläche (92) eine Schnittkante der Platte ist.

27. Doppelwandige Untereinheit für einen Schiffsrumpfaufbau, mit:
einem ersten Satz von länglichen Platten (32), die in Reihe miteinander an Verbindungen (104) jeweils entlang aneinandergrenzender Längsseitenflächen (92) der Platten verschweißt sind;
einem zweiten Satz von länglichen Platten (32), die in Reihe miteinander an Verbindungen (104) entlang jeweils aneinandergrenzender Längsseitenflächen (92) der Platten verschweißt sind, wobei der erste und der zweite Satz von Platten (32) auf Abstand zueinander sind;
einem weiteren Satz von länglichen Platten (66), die zwischen dem ersten und dem zweiten Plattensatz (32) entlang jeweiliger Längsseitenflächen (92) der weiteren Platten (66) an Positionen angrenzend an jeweilige Verbindungen (104) der inneren und der äußeren Rumpfstrukturen verschweißt sind;
dadurch gekennzeichnet, daß jede Längsseitenfläche (92) einer Platte (32, 66) eine Seitenfläche ist, die die Platte mit einer Tiefe abschließt, die im wesentlichen gleich der Dicke der jeweiligen Platte ist, und daß jede Platte (66) des weiteren Satzes in Ausrichtung mit einer jeweiligen Verbindung (104) von aneinandergrenzenden Platten (32) des ersten Satzes und in Ausrichtung mit einer jeweiligen Verbindung (104) zwischen aneinandergrenzenden Platten (32) des zweiten Satzes angeordnet ist, wobei an jeder Verbindung (104) die drei aneinandergefügten Längsseitenflächen (92) durch eine einzelne Schweißnaht miteinander verschweißt sind, die zwischen jeder Seitenfläche (92) und den beiden übrigen Verbindungsseitenflächen (92) ausgedehnt ist.

28. Verfahren zur Herstellung einer Subkomponente zum Verbinden mit anderen Subkomponenten in einem Schiffsrumpf-Herstellungsverfahren, bei dem:
ein Paar von länglichen Platten (32) angeordnet Seitenfläche an Seitenfläche entlang ihrer Längsseitenflächen bereitgestellt wird,
eine weitere längliche Platte (66) mit einer Längsseitenfläche (92) angrenzend an die Längsseitenflächen (92) der beiden aneinandergrenzenden Platten (32) bereitgestellt wird, und
die drei Platten (32, 66) miteinander verschweißt werden,
dadurch gekennzeichnet, daß die Platten miteinander verschweißt werden, indem jede Platte (32, 66) in vertikaler Ausrichung durch Angreifen an beiden gegenüberliegenden Flächen gehalten wird, um die Platten in einer gewünschten Form und Position zu halten, in der ein vertikal verlaufender T-Verbindungsbereich für die Verbindung der Platten gebildet wird; indem eine T-Verbindung (104) an dem vertikal verlaufenden T-Verbindungsbereich durch sich vertikal bewegende Schweißmittel geschweißt wird, während die Platten gehalten werden; und indem die Platten aus ihrer Halterung freigegeben werden.

29. Verfahren nach Anspruch 28, bei dem jede Längsseitenfläche (92) einer Platte (32, 66) eine Seitenfläche ist, die die Platte mit einer Tiefe abschließt, die im wesentlichen gleich der Dicke der jeweiligen Platte ist, und die weitere Platte (66) in Ausrichtung mit der Verbindung zwischen dem Paar aneinandergrenzender Platten (32) positioniert ist, wobei die drei Verbindungslängskanten (92) durch eine einzelne Schweißnaht miteinander verschweißt werden, die zwischen jeder Seitenfläche (92) und den beiden anderen Seitenflächen (92) der Verbindung ausgedehnt ist.

30. Verfahren zum Herstellen einer Subkomponente zum Verbinden mit anderen Subkomponenten in einem Schiffsrumpfherstellungsverfahren, bei dem:
ein erstes Paar länglicher Platten (32) Seitenfläche an Seitenfläche entlang ihrer Längsseitenflächen angeordnet werden;
ein zweites Paar von länglichen Platten (32) Seitenfläche an Seitenfläche entlang ihrer Längsseitenflächen angeordnet wird;
eine weitere längliche Platte (66) bereitgestellt wird, die eine Längsseitenfläche (92) benachbart zu den Längsseitenflächen (92) des ersten Paars von Platten (32) und eine gegenüberliegende Längsseitenfläche (92) benachbart angeordnet zu den Längsseitenflächen (92) des zweiten Paars von Platten (32) hat, und
Schweißnähte zwischen jeweiligen Platten (32, 66) gebildet werden,
dadurch gekennzeichnet, daß die Platten zusammengeschweißt werden, indem jede Platte (32, 66) in vertikaler Ausrichtung durch Angriff an beiden gegenüberliegenden Flächen gehalten wird, um die Platten in einer gewünschten Form und Position zu halten, in der ein erster vertikal verlaufender T-Verbindungsbereich (104) an einer Längsseitenfläche (92) der weiteren rechteckigen Platte (66) und der ein zweiter vertikal verlaufender T-Verbindungsbereich (104) an der gegenüberliegenden Längsseitenfläche (92) der weiteren rechteckigen Platte (66) gebildet wird; indem eine jeweilige T-Verbindung (104) an jedem T-Verbindungsbereich durch sich vertikal bewegende Schweißmittel verschweißt wird, während die Platten gehalten werden; und indem die Platten aus ihrer Halterung freigegeben werden.

31. Verfahren nach Anspruch 30, bei dem jede Längsseitenfläche (92) einer Platte (32, 66) eine Seitenfläche ist, die die Platte mit einer Tiefe abschließt, die im wesentlichen gleich der Dicke der jeweiligen Platte ist, und bei der jede weitere Platte (66) ausgerichtet mit einer jeweiligen Verbindung benachbarter Platten (32) des ersten Satzes und ausgerichtet mit einer jeweiligen Verbindung zwischen benachbarten Platten (32) des zweiten Satzes angeordnet ist, wobei an jeder Verbindung (104) die drei Verbindungslängsseitenflächen (92) durch eine einzelne Schweißnaht miteinander verschweißt werden, die zwischen jeder Seitenfläche (92) und den beiden anderen Verbindungsseitenflächen (92) ausgedehnt ist.

32. Verfahren nach einem der Ansprüche 28 bis 31, wobei das Schweißen der T-Verbindungen (104) durch Elektroschlacke-Schweißen durchgeführt wird, wobei eine Kühlung entlang beider Oberflächen jeder Platte (32) in dem zweiten Satz bereitgestellt wird, während die jeweilige T-Verbindung geschweißt wird.

33. Verfahren nach einem der Ansprüche 28 bis 31, wobei das Schweißen der T-Verbindungen (104) durch Elektrogasschweißen durchgeführt wird, wobei eine Kühlung entlang beider Oberflächen jeder Platte in dem zweiten Satz bereitgestellt wird, während die jeweilige T-Verbindung geschweißt wird.

34. Verfahren nach einem der Ansprüche 28 bis 33, bei dem die Platten (32, 66) in den Schritten (a), (b) und (c) bereitgestellt werden, indem die Platten aus Blechmaterial in der gewünschten Größe ausgeschnitten werden und jede Längsseitenfläche (92) eine Schnittkante der Platte ist.

## Revendications

1. Structure de coque de navire, comprenant :
un premier ensemble de plaques allongées (32) soudées les unes aux autres en série à des joints (104) le long de bords longitudinaux adjacents respectifs (92) des plaques pour la formation d'une structure externe de coque ayant un fond et deux côtés opposés latéralement,
un second ensemble de plaques allongées (32) soudées les unes aux autres en série à des joints (104) le long de bords longitudinaux adjacents respectifs (92) des plaques pour la formation d'une structure interne de coque,
un ensemble de plaques longitudinales (66) de membrure soudées entre les structures interne et externe de coque le long de bords longitudinaux respectifs internes et externes (92) des plaques (66) de membrure à des positions adjacentes auxdits joints respectifs (104) des structures interne et externe de coque, et
une cloison transversale (118),
caractérisée en ce que
la structure de la coque du navire est une structure à double coque dans laquelle la structure interne de coque a un fond et des côtés latéralement opposés et est disposée dans la structure externe de coque d'une manière telle que les fonds et côtés respectifs des structures de coque soient distants,
chaque bord longitudinal (92) d'une plaque (32, 66) étant un bord qui termine la plaque à une profondeur pratiquement égale à l'épaisseur de la plaque respective, et chaque plaque longitudinale de membrure (66) étant placée en position alignée sur un joint respectif (104) formé entre des plaques adjacentes (32) de la coque externe et en position alignée sur un joint respectif (104) de plaques adjacentes (32) de la coque interne, les trois bords longitudinaux raccordés (92) étant soudés, à chaque joint (104) par une soudure unique placée entre chaque bord (92) et les deux bords raccordés restants (92).

2. Structure de coque de navire selon la revendication 1, dans laquelle chaque plaque (32) du premier et du second ensemble de plaques est une plaque à courbure cylindrique (32) et convexe vers l'extérieur.

3. Structure de coque de navire selon la revendication 1 ou 2, dans laquelle chaque bord longitudinal (92) est un bord coupé de la plaque respective (32, 66).

4. Structure de coque de navire selon la revendication 1, 2 ou 3, dans laquelle la coque externe a une interruption placée vers le milieu du fond de la coque externe, et la coque interne a une interruption placée vers le milieu du fond de la coque interne, et une quille longitudinale (139) à conduit est disposée en position médiane dans les deux interruptions et est raccordée par soudage aux bords longitudinaux des plaques adjacentes respectives du premier et du second ensemble de plaques (32).

5. Structure de coque de navire selon l'une quelconque des revendications précédentes, dans laquelle la coque interne et la coque externe ont deux extrémités longitudinalement opposées, et la cloison (118) est placée à l'une des extrémités de la coque interne.

6. Structure parallèle de tronçon médian d'une coque de navire comprenant plusieurs modules analogues (124) raccordés par soudage en série bout à bout pour la formation d'une structure parallèle (132) de tronçon médian de coque, chaque module comprenant une structure de coque selon l'une quelconque des revendications précédentes.

7. Coque de navire comprenant une structure de tronçon médian de coque selon la revendication 6, un tronçon avant de coque raccordé par soudage à une première extrémité de la structure du tronçon médian de coque (132), et un tronçon arrière de coque raccordé par soudage à l'extrémité opposée de la structure du tronçon médian de coque (132).

8. Structure de coque de navire selon l'une quelconque des revendications précédentes ou incorporée à la structure selon l'une quelconque des revendications précédentes, dans laquelle chaque plaque de membrure (66) comporte, sur une première face, plusieurs raidisseurs (48) de plaque de réaction dépassant latéralement, séparés les uns des autres longitudinalement le long des coques interne et externe et dépassant chacun d'une coque interne adjacente vers une coque externe adjacente.

9. Structure de coque de navire selon la revendication 8, dans laquelle chaque plaque de membrure (66) a au moins un trou (58) d'allégement débouchant latéralement par rapport aux coques interne et externe longitudinalement entre un raidisseur adjacent respectif de deux des raidisseurs (48) de plaque de réaction.

10. Structure de coque de navire selon la revendication 4 ou l'une quelconque des revendications ayant les propriétés de la revendication 4, dans laquelle les coques interne et externe et les plaques de membrure sont constituées de quatre sous-ensembles pratiquement identiques (108) qui comportent des sous-ensembles inférieurs (108) bâbord et tribord qui sont des images spéculaires l'un de l'autre, raccordés respectivement par le bord à la quille (139) à conduit et à des sous-ensembles (108) de parois latérales bâbord et tribord qui sont des images spéculaires l'un de l'autre.

11. Structure de coque de navire selon la revendication 10, dans laquelle les côtés des coques interne et externe ont des bords supérieurs et une structure de pont (140) qui les relient et qui raccordent des ensembles (108) à parois latérales bâbord et tribord aux bords opposés des coques interne et externe.

12. Structure de coque de navire selon la revendication 10 ou 11, lorsqu'elle comprend les propriétés de la revendication 2, dans laquelle, aux transitions respectives (141) entre le fond et les côtés de chacune des coques interne et externe, les coques interne et externe ont des rayons de bouchain correspondant approximativement aux rayons de courbure d'autres des plaques d'acier à courbure cylindrique des coques respectives, notamment celles qui sont adjacentes aux transitions (141) et distantes de celles-ci.

13. Structure de coque de navire selon la revendication 2 ou l'une quelconque des revendications ayant les propriétés de la revendication 2, dans laquelle chaque première plaque (32) a une forme pratiquement rectangulaire en plan afin qu'elle comporte deux grands bords et deux petits bords et soit courbée autour d'un axe qui est sensiblement parallèle aux grands bords, la seconde plaque (32) a une forme pratiquement rectangulaire en plan afin qu'elle comporte deux grands bords et deux petits bords, et elle est courbée autour d'un axe qui est pratiquement parallèle aux grands bords.

14. Structure parallèle de tronçon médian de coque selon la revendication 6, caractérisée par l'absence pratiquement totale d'un renforcement transversal entre les coques interne et externe mis à part les cloisons qui ont une périphérie externe soudée à plusieurs des plaques (32) du second ensemble de plaques.

15. Procédé de construction d'une coque de navire, comprenant les étapes suivantes :
(a) la disposition d'un premier ensemble de plaques allongées (32) disposées en série bord à bord le long de leur bords longitudinaux (92),
(b) la disposition d'un second ensemble de plaques allongées (32) placées en série bord à bord suivant leurs bords longitudinaux (92),
(c) la disposition d'un ensemble supplémentaire de plaques allongées (66) entre le premier et le second ensemble, chaque plaque (66) de l'ensemble supplémentaire ayant un bord longitudinal (92) adjacent aux bords longitudinaux (92) de deux plaques adjacentes (32) dans le premier ensemble et un bord longitudinal opposé (92) adjacent aux bords longitudinaux de deux des plaques (32) du second ensemble qui sont adjacentes, et
(d) la formation de soudure entre les plaques respectives (32, 66) pour la formation d'une structure de coque de navire à double paroi,
caractérisé en ce que les plaques sont soudées les unes aux autres dans des étapes comprenant le maintien de chaque plaque (32, 66) avec une orientation verticale par mise en contact des deux faces opposées afin que les plaques soient maintenues à la configuration et à la position voulues délimitant un emplacement de joint en T disposé verticalement pour chaque jonction des plaques, le soudage d'un joint respectif en T (104) à chaque emplacement de joint en T par déplacement vertical du dispositif de soudage avec maintien des plaques, et la suppression du maintien des plaques.

16. Procédé selon la revendication 15, dans lequel :
dans l'étape (a), le premier ensemble de plaques (32) est formé de plaques rectangulaires à courbure cylindrique (32) placées en série bord à bord, toutes les plaques étant convexes dans une direction, tous les axes de courbure étant orientés verticalement, et
dans l'étape (b), le second ensemble de plaques (32) est formé de plaques rectangulaires (32) à courbure cylindrique disposées en série bord à bord et qui sont toutes convexes dans ladite direction, tous les axes de courbure étant orientés verticalement.

17. Procédé selon la revendication 15 ou 16, dans lequel chaque bord longitudinal (92) d'une plaque (32, 66) est un bord qui termine la plaque à une profondeur pratiquement égale à l'épaisseur de la plaque respective, et chaque plaque (66) de l'ensemble supplémentaire est positionnée dans l'alignement d'un joint respectif (104) formé entre des plaques adjacentes (32) du premier ensemble et dans l'alignement d'un joint respectif (104) formé entre des plaques adjacentes (32) du second ensemble, et, à chacun des joints (104), les trois bords longitudinaux raccordés (92) sont soudés par une seule soudure disposée entre chaque bord (92) et les deux bords raccordés restants (92).

18. Procédé selon la revendication 15, 16 ou 17, comprenant en outre les étapes suivantes :
(e) la répétition des étapes (a)-(d) plusieurs fois pour la réalisation de plusieurs sous-ensembles analogues (108),
(f) la disposition des sous-ensembles (108) en série autour d'une cloison (118), et
(g) le soudage de bords correspondants et de plaques correspondantes de sous-ensembles adjacents (108) les uns aux autres et le soudage des sous-ensembles (108) à la cloison (118) pour la formation d'un module (124) à double coque ayant une partie de fond et deux parties de côté opposées latéralement.

19. Procédé selon la revendication 18, dans lequel les étapes (f) et (g) sont exécutées lorsque les plaques (32, 66), et en conséquence le module (124), gardent une orientation verticale.

20. Procédé selon la revendication 19, dans lequel
les étapes (a)-(e) sont exécutées dans une installation à terre, et les étapes (f) et (g) sont exécutées à bord d'un chaland (120) à flottabilité variable, à l'aide d'une grue flottante (110) qui soulève successivement les sous-ensembles individuels (108) d'une installation (82) et les place ensuite sur le chaland (120) sous forme de ladite série autour de la cloison (118), et
dans lequel le chaland (120) est immergé sur un support fixe (122) chaque fois qu'un sous-ensemble (108) doit être placé sur lui et, entre les moments où deux sous-ensembles (108) sont successivement placés sur lui, le chaland (120) subit parfois une augmentation de flottabilité afin qu'il flotte au-dessus du support fixe (122) et soit déplacé de manière flottante afin qu'il dispose d'un emplacement auquel doit être placé le sous-ensemble suivant (108) à une position plus commode par rapport à l'installation à terre (88).

21. Procédé selon l'une quelconque des revendications 15 à 20, dans lequel le soudage des joints en T (104) est réalisé par soudage sous laitier conducteur, le refroidissement étant assuré le long des deux faces de chaque plaque (32) du second ensemble lorsque le joint respectif en T est soudé.

22. Procédé selon l'une quelconque des revendications 15 à 20, dans lequel le soudage des joints en T (104) est réalisé par soudage sous gaz protecteur, le refroidissement étant réalisé le long des deux faces de chaque plaque du second ensemble lorsque le joint respectif en T est soudé.

23. Procédé selon les revendications 15 à 22, dans lequel, dans l'étape (c), tous les joints en T (104) sont soudés simultanément à tous les emplacements de joints en T.

24. Procédé selon l'une quelconque des revendications 15 à 23, dans lequel le maintien de l'étape (c) et la suppression du maintien de l'étape (d) sont réalisés respectivement par serrage et desserrage de vérins hydrauliques (88) agissant horizontalement et montés sur des tours respectives (94, 96).

25. Procédé selon la revendication 19, 20 ou l'une quelconque des revendications 21 à 24, lorsqu'il comprend les propriétés de la revendication 19, comprenant en outre :
(h) la répétition des étapes (a)-(g) plusieurs fois pour la formation d'une série de modules identiques (124),
(i) le basculement de chaque module (124) à une position horizontale avec le fond vers le bas, et
(j) le soudage en série des modules (124) bout à bout les uns aux autres avec formation de cette manière d'une structure parallèle de tronçon médian de navire à double coque ayant deux extrémités opposées.

26. Procédé selon l'une quelconque des revendications 15 à 25, dans lequel, dans les étapes (a), (b) et (c), les plaques (32, 66) sont obtenues par découpe des plaques à une dimension nécessaire dans un matériau en feuilles, et chaque bord longitudinal (92) est un bord coupé de la plaque.

27. Sous-ensemble à double paroi destiné à la construction d'une coque de navire, comprenant :
un premier ensemble de plaques allongées (32) soudées les unes aux autres en série à des joints (104) le long de bords longitudinaux adjacents respectifs (92) des plaques,
un second ensemble de plaques allongées (32) soudées les unes aux autres en série à des joints (104) le long de bords longitudinaux adjacents respectifs (92) des plaques, le premier et le second ensemble de plaques (32) étant espacés l'un de l'autre,
un ensemble supplémentaire de plaques allongées (66) soudées entre les plaques (32) du premier et du second ensemble le long de bords longitudinaux respectifs (92) des plaques supplémentaires (66) à des positions adjacentes aux joints respectifs (104) des structures de coque interne et externe,
caractérisé en ce que chaque bord longitudinal (92) d'une plaque (32, 66) est un bord qui termine la plaque à une profondeur pratiquement égale à l'épaisseur de la plaque respective, et chaque plaque (66) de l'ensemble supplémentaire est positionnée dans l'alignement d'un joint respectif (104) entre les plaques adjacentes (32) du premier ensemble et dans l'alignement d'un joint respectif (104) de plaques adjacentes (32) du second ensemble, les trois bords longitudinaux raccordés (92) étant soudés, à chacun des joints (104), par une simple soudure disposée entre chaque bord (92) et les deux bords raccordés restants (92).

28. Procédé de fabrication d'un sous-élément destiné au raccordement à d'autres sous-éléments dans un procédé de construction de coque de navire, comprenant :
la réalisation d'une paire de plaques allongées (32) placées bord à bord le long des bords longitudinaux,
la disposition d'une plaque allongée supplémentaire (66) ayant un bord longitudinal (92) adjacent aux bords longitudinaux (92) des deux plaques adjacentes (32), et
le soudage des trois plaques (32, 66) les unes aux autres,
caractérisé en ce que les plaques sont soudées les unes aux autres par des étapes comprenant le maintien de chaque plaque (32, 66) à une orientation verticale par mise en contact des faces opposées afin que les plaques soient maintenues à la configuration et à la position voulues donnant l'emplacement d'un joint en T disposé verticalement pour la jonction des plaques, le soudage d'un joint en T (104) à l'emplacement du joint en T placé verticalement par déplacement vertical d'un dispositif de soudage, avec maintien des plaques, et la suppression du maintien des plaques.

29. Procédé selon la revendication 28, dans lequel chaque bord longitudinal (92) d'une plaque (32, 66) est un bord qui termine la plaque à une profondeur pratiquement égale à l'épaisseur de la plaque respective, et la plaque supplémentaire (66) est disposée dans l'alignement de la jonction formée entre les deux plaques adjacentes (32), les trois bords longitudinaux raccordés (92) étant soudés les uns aux autres par une soudure unique disposée entre chaque bord (92) et les deux bords raccordés restants (92).

30. Procédé de fabrication d'un sous-élément destiné à être raccordé à d'autres sous-éléments dans un procédé de construction de coque de navire, comprenant :
la disposition d'une première paire de plaques allongées (32) placées bord à bord le long de bords longitudinaux,
la disposition d'une seconde paire de plaques allongées (32) placées bord à bord le long de bords longitudinaux,
la disposition d'une plaque allongée supplémentaire (66) ayant un bord longitudinal (92) qui est adjacent aux bords longitudinaux (92) des deux premières plaques (32) et un bord longitudinal opposé (92) qui est adjacent aux bords longitudinaux (92) des deux secondes plaques (32), et
la disposition de soudure entre les plaques respectives (32, 66),
caractérisé en ce que les plaques sont soudées les unes aux autres par des étapes comprenant le maintien de chaque plaque (32, 66) avec une orientation verticale par mise en contact des faces opposées afin que les plaques soient maintenues à la configuration et avec la position voulues délimitant un premier emplacement (104) de joint en T disposé verticalement à un premier bord longitudinal (92) de la plaque rectangulaire supplémentaire (66), et la délimitation d'un second emplacement (104) de joint en T disposé verticalement au bord longitudinal opposé (92) de la plaque rectangulaire supplémentaire (66), le soudage d'un joint respectif en T (104) à chaque emplacement de joint en T disposé verticalement par déplacement vertical d'un dispositif de soudage avec maintien des plaques, puis la suppression du maintien des plaques.

31. Procédé selon la revendication 30, dans lequel chaque bord longitudinal (92) d'une plaque (32, 66) est un bord qui termine la plaque d'une profondeur pratiquement égale à l'épaisseur de la plaque respective, et la plaque supplémentaire (66) est disposée dans l'alignement d'une jonction respective entre des plaques adjacentes (32) du premier ensemble et dans l'alignement d'une jonction respective des plaques adjacentes (32) du second ensemble, les trois bords longitudinaux raccordés (92) étant soudés les uns aux autres, à chaque joint (104), par une seule soudure disposée entre chaque bord (92) et les deux bords raccordés restants (92).

32. Procédé selon l'une quelconque des revendications 28 à 31, dans lequel le soudage des joints en T (104) est réalisé par soudage sous laitier conducteur, le refroidissement étant assuré le long des deux faces de chaque plaque (32) du second ensemble lorsque le joint respectif en T est en cours de soudage.

33. Procédé selon l'une quelconque des revendications 28 à 31, dans lequel le soudage des joints en T (104) est réalisé par soudage sous gaz protecteur, le refroidissement étant assuré le long des deux faces de chaque plaque du second ensemble lorsque le joint respectif en T est en cours de soudage.

34. Procédé selon l'une quelconque des revendications 28 à 33, dans lequel, au cours des étapes (a), (b) et (c), les plaques (32, 66) sont réalisées par découpe des plaques à une dimension nécessaire dans un matériau en feuilles, et chaque bord longitudinal (92) est un bord coupé de la plaque.
